(19) Europäisches Patentamt
European Patent Office
Office européen des brevets

(11) EP 0 724 812 B1

(12) **FASCICULE DE BREVET EUROPEEN**

(45) Date de publication et mention de la délivrance du brevet:
**19.04.2000 Bulletin 2000/16**

(21) Numéro de dépôt: **94931619.4**

(22) Date de dépôt: **21.10.1994**

(51) Int. Cl.⁷: **H04N 7/30**, H04N 7/36, H04N 7/50, H04N 7/26, H04N 7/46, H04N 7/54

(86) Numéro de dépôt international:
**PCT/FR94/01229**

(87) Numéro de publication internationale:
**WO 95/11571 (27.04.1995 Gazette 1995/18)**

# (54) PROCEDE ET DISPOSITIF DE CODAGE INTER-TRAME AVEC REGULATION DE DEBIT POUR L'ENREGISTREMENT D'IMAGES SUR MAGNETOSCOPE

ZWISCHENBILDKODIERUNGSVERFAHREN UND VORRICHTUNG MIT DARENRATENSTEUERUNG FÜR MAGNETBAND-BILDAUFZEICHNUNGSGERÄT.

CONTROLLED-THROUGHPUT INTERFRAME CODING METHOD AND DEVICE FOR VCR IMAGE RECORDING

(84) Etats contractants désignés:
**DE ES FR GB IT**

(30) Priorité: **22.10.1993 FR 9312623**

(43) Date de publication de la demande:
**07.08.1996 Bulletin 1996/32**

(73) Titulaire: **THOMSON multimedia**
**92648 Boulogne Cédex (FR)**

(72) Inventeur:
**GUILLOTEL, P.,**
**Thomson-CSF SCPI**
**eF-92402 Courbevoie Cédex (FR)**

(74) Mandataire:
**Ruellan-Lemonnier, Brigitte et al**
**THOMSON multimedia,**
**46 quai A. Le Gallo**
**92648 Boulogne Cédex (FR)**

(56) Documents cités:

| | |
|---|---|
| EP-A- 0 446 001 | EP-A- 0 447 247 |
| EP-A- 0 466 981 | EP-A- 0 478 230 |
| EP-A- 0 484 140 | EP-A- 0 493 136 |
| EP-A- 0 535 960 | EP-A- 0 538 834 |
| EP-A- 0 540 961 | EP-A- 0 565 219 |

- **PATENT ABSTRACTS OF JAPAN vol. 17, no. 460 (E-1419) 23 Août 1993 & JP,A,05 103 315 (HITACHI LTD.) 23 Avril 1993**
- **SIGNAL PROCESSING. IMAGE COMMUNICATION, vol.5, no.1/2, 1 Février 1993, ELSEVIER, AMSTERDAM, NL pages 21 - 37, XP345611 C.T. CHEN ET AL. 'Hybrid Extended MPEG Video Coding Algorithm for General Video Applications'**
- **PATENT ABSTRACTS OF JAPAN vol. 16, no. 174 (E-1195) 27 Avril 1992 & JP,A,04 018 857 (RICOH CO. LTD.) 23 Janvier 1992**
- **PATENT ABSTRACTS OF JAPAN vol. 17, no. 15 (E-1305) 12 Janvier 1993 & JP,A,04 245 864 (TOSHIBA CORP.) 2 Septembre 1992**
- **PATENT ABSTRACTS OF JAPAN vol. 8, no. 161 (E-257) 26 Juillet 1984 & JP,A,59 061 278 (FUJI SHASHIN FILM K.K.) 7 Avril 1984**
- **PATENT ABSTRACTS OF JAPAN vol. 8, no. 161 (E-257) 26 Juillet 1984 & JP,A,59 061 288 (FUJI SHASHIN FILM K.K.) 7 Avril 1984**
- **SIGNAL PROCESSING OF HDTV,III, 4 Septembre 1991, ELSEVIER, AMSTERDAM, NL pages 33 - 41, XP379936 P. KAUFF ET AL. 'A DCT Coding Scheme for Digital HDTV Recording'**

EP 0 724 812 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé et un dispositif de codage inter-trame avec régulation de débit pour l'enregistrement d'images sur magnétoscope.

Elle s'applique notamment à l'enregistrement numérique d'image mais également à la transmission et au stockage des images.

Pour les studios de télévision haute définition numérique de l'avenir il paraît essentiel de pouvoir enregistrer le signal de télévision haute définition sous une forme numérique pour préserver la qualité des images au cours des multiples opérations d'enregistrement lecture qui ont lieu lors du montage des bandes d'enregistrement. Les magnétoscopes haute définition analogiques connus utilisent des bobines de bandes magnétiques et ce support d'enregistrement pourrait également être envisagé pour les magnétoscopes numériques. Cependant, pour permettre un usage convenable et fiable, les magnétoscopes à cassettes seraient mieux adaptés. En fait la technologie actuelle parait mal convenir à ces choix car, pour obtenir le débit de données élevé demandé par un tel enregistrement, il faudrait utiliser un nombre de têtes de lecture très important de 8 ou de 16, une bande magnétique et une méthode d'enregistrement beaucoup plus performantes que celles disponibles actuellement. D'autres problèmes liés à l'enregistrement sur cassette sont dus au fait que le temps disponible sur une bande doit dépasser au moins 60 minutes et que l'enregistrement du son doit être effectué sur au moins quatre canaux audio numériques. Pour répondre à ces exigences des solutions numériques à compression de débit binaire du signal peuvent naturellement être envisagées en respectant les principales contraintes liées à l'utilisation d'un magnétoscope numérique. Une première contrainte est qu'il faut disposer d'un débit fixe par "paquet" d'images constitué d'un nombre donné d'images afin de permettre le montage d'images et l'accès aléatoire à ces "paquets" d'images sur la bande d'enregistrement. L'accès aléatoire nécessite qu'un paquet d'images commence toujours exactement de façon synchrone avec l'instant de synchronisation enregistré sur la bande sous peine de voir la recherche et le positionnement impossible. Le montage des images nécessite que les images remplacées occupent le même espace sur la bande que les nouvelles images et que les paquets d'images soient bien indépendants les uns des autres. Suivant une deuxième contrainte, le codage utilisé doit permettre la lecture d'image dans les modes spéciaux tels que le "ralenti", l'"accéléré" et le mode "pas à pas". Dans les modes "ralenti", la reconstruction des images doit être parfaite et dans les modes "accéléré" il faut pouvoir reconnaître les images. Il faut savoir que pour les magnétoscopes à cassettes existant actuellement, dans les modes "ralenti" l'information lue contient peu d'erreurs grâce aux techniques connues sous les vocables anglo-saxons d'"over-scanning" et de "tracking", le ralenti peut s'obtenir par répétition des trames ou par interpolation. Dans les modes "rapide" cependant, du fait de la position des têtes de lecture vis-à-vis de la bande, une partie seulement des informations est lue (le reste est interpolé). De plus pour une même image certaines lignes proviennent de l'image à l'instant t et d'autres de l'image aux instants t+1, t+2, ..., en fonction de la vitesse de lecture. Enfin, suivant une troisième contrainte pour les applications professionnelles il est impératif de garantir une qualité de reconstruction sans dégradation visible de l'image même après une série de codages-décodages.

La plupart des techniques de réduction de débit existantes ont été développées pour des applications de transmission (voir par exemple EP-A-0 535 960 ou EP-A-0 540 961). Elles sont généralement basées sur une décomposition de l'image par transformée cosinus (ou sous-bandes) suivi d'un codage à longueur variable. Le débit moyen est fixe, bien que le débit soit variable d'une image à l'autre.

Pour les applications d'enregistrement le principal problème est de garder un débit fixe par image ou paquet d'images tout en utilisant des techniques adaptatives au contenu de l'image, ces techniques étant les seules qui permettent d'obtenir des résultats satisfaisants. Pour cela une façon de résoudre le problème consiste à effectuer un codage intraimage, c'est-à-dire indépendant d'une image à l'autre et une préanalyse de l'image qui permet d'allouer le débit disponible en fonction du contenu de chaque bloc de l'image. Les méthodes appliquées sont associées aux techniques classiques utilisées en transmission par décomposition en transformée cosinus (ou sous-bandes), quantification et codage à longueur variable. Elles sont développées pour des applications professionnelles et sont par exemple décrites :

- dans l'article de N. ENDOH et ai ayant pour titre "Experimental digital VCR with New DCT-Based Bit-Rate Reduction and Channel Coding" publié dans SMPTE Journal de Juillet 1992, aux pages 475 à 480
- dans l'article de P. KAUFF et ai ayant pour titre "A DCT Coding Scheme for Digital HDTV Recording" publié au 4ème International Workshop sur la Télévision Haute Définition qui a eu lieu à Turin en Italie en 1991
- dans l'article de T. KONDO et al ayant pour titre "Adaptative Dynamic Range Coding Scheme for Future HDTV Digital VTR" publié au 4ème International Workshop sur la Télévision Haute Définition à Turin en Italie en 1991.

Dans l'article de N. ENDOH la technique de codage est dite intra-image avec une décomposition de l'image en transformée cosinus, une quantification, puis un codage à longueur variable, le débit fixe est obtenu par pré-analyse de l'image. Celle-ci consiste en un calcul d'énergie par bloc qui permet d'allouer le débit localement en fonction de la difficulté de codage des blocs, et en un calcul de l'énergie globale de l'image qui permet d'allouer le débit total disponible pour coder l'image. Cependant cette technique qui a été développée pour un autre formatage des données que celui utilisé dans les magnétoscopes actuels ne peut pas résoudre a priori le problème des modes "accéléré".

Dans l'article de P. KAUFF la méthode utilisée est basée sur le même principe que précédemment avec une pré-analyse mais avec aussi une technique qui permet de résoudre en partie le problème des modes "accéléré", les coefficients de la transformée cosinus les plus importants n'étant pas codés avec des codes à longueurs variables mais insérés régulièrement sur la bande et sur un nombre fixe de bits. De plus, un choix entre les modes intra-trames ou intra-images est effectué. Mais certains problèmes restent non résolus en ce qui concerne notamment les solutions qu'il faut accessoirement prendre lorsque le débit est dépassé. D'autre part, le résultat obtenu en terme de qualité d'image en mode "accéléré" paraît incertain. De plus cette méthode impose de développer un nouveau magnétoscope tenant compte du fait que le formatage des données sur la bande est modifié.

Dans l'article de T. KONDO la méthode utilisée est différente car pour obtenir un débit fixe par période d'images de deux images, la technique n'utilise pas de codage à longueurs variables dont le coût binaire est très difficile à prévoir. La technique mise en oeuvre consiste à découper l'image en blocs à 3 dimensions, avec 6 lignes et 6 pixels pour les deux images consécutives, puis à calculer la dynamique à l'intérieur de chaque bloc par une pré-analyse afin d'allouer localement le débit nécessaire à chaque bloc. La somme des dynamiques sur l'image permet alors d'allouer le débit total disponible à toute l'image. Avec cette méthode le débit est fixe pour 2 images. Cependant elle ne permet pas les modes rapides.

Ces différentes techniques ont d'autre part un inconvénient commun qui peut être généralisé à tous les codages de type intra-image et qui est la limitation à 2 ou 3 du taux de compression des données. Les techniques de codage inter-image employées dans les applications grand public améliorent quant à elles ce taux de compression mais donnent généralement une qualité image limitée et aucune possibilité de montage.

Le but de l'invention est de pallier les inconvénients précités.

A cet effet, l'invention a pour objet un procédé de codage inter-trame pour l'enregistrement d'images sur magnétoscope, tel que défini à la revendication 1.

L'invention a aussi pour objet un dispositif pour la mise en oeuvre du procédé, tel que défini à la revendication 11.

La régulation utilisée par le procédé de codage permet, entre autres, d'obtenir un débit fixe sur une période d'images correspondant à un groupe de N trames codées en longueur variable, les critères de choix de N étant un compromis entre la complexité matérielle du dispositif la qualité d'image qui augmentent avec N et les possibilités de montage qui diminuent quand N augmente. Elle permet également de limiter la capacité des mémoires tampon de régulation de débit.

L'invention a pour principal avantage qu'elle permet de satisfaire aux exigences des magnétoscopes numériques professionnels à la fois par la qualité des images obtenues, les modes spéciaux et les facilités de montage qu'elle autorise.

D'autre part, elle permet d'obtenir une image sous-échantillonnée ou "sous-image" codée sur un nombre réduit de bits dans la bande de base (bande basse fréquence) pour chacune des composantes de luminance et de chrominance permettant un fonctionnement des magnétoscopes numériques en modes rapides et assurant une compatibilité avec les magnétoscopes existants. La taille de chaque "sous-image" peut être choisie en fonction d'un compromis entre la qualité d'image et le débit disponible. Chaque sous-image est obtenue simplement en prenant uniquement les 4 bandes de plus basse fréquence d'une décomposition sous-bande par transformation cosinus discrète.

Enfin elle permet d'obtenir des taux de compression des données supérieurs à 4 et de conserver un format de données tout à fait compatible avec le format 4/2/2 des magnétoscopes existants.

D'autres caractéristiques et avantages de l'invention apparaîtront ci-après à l'aide de la description qui va suivre, donnée à titre d'exemple non limitatif et faite en regard des dessins annexés qui représentent :

- la figure 1, un dispositif de codage inter et intra-image selon l'art antérieur,
- la figure 2, un dispositif de codage selon l'invention,
- la figure 3, un ensemble de sous-blocs constituant un macrobloc central et les macroblocs voisins choisis pour la réassignation de vecteurs mouvement,
- la figure 4, un exemple d'affectation des vecteurs mouvement dans un mode projection,
- la figure 5, des courbes d'évolution du débit en fonction du pas de régulation,
- les figures 6 et 7, les différentes étapes de la régulation de débit utilisée par le procédé de codage, sous la forme d'organigrammes.

En se reportant à la figure 1, il s'agit d'un dispositif de codage selon l'art antérieur pour coder une image inter ou intra avec compensation de mouvement.

Ce dispositif est connu pour être décrit par exemple dans la demande de brevet français n° FR-A-2 661 062 déposée par la Demanderesse.

Il est ainsi constitué d'un convertisseur lignes/blocs 1 permettant la formation de blocs d'image transmis simultanément à un sélecteur 2 inter ou intra-images et à une première entrée d'un soustracteur 3. L'entrée à soustraire du soustracteur 3 ou deuxième entrée est le bloc d'image prédit, sa sortie représentant alors l'erreur entre le bloc courant et le bloc prédit. Cette sortie est reliée au sélecteur 2. Le choix effectué par le sélecteur est basé sur un critère énergétique. Le bloc inter ou intra sélectionné est ensuite quantifié par le dispositif quantificateur Q avant d'être transmis en sortie. Ce bloc est reconstitué, au bruit de quantification près, par le circuit de quantification inverse $Q^{-1}$ 5. Le bloc intra est directement mémorisé dans la mémoire MEM 6 alors qu'en mode inter, l'erreur quantifiée puis déquantifiée du bloc considéré est additionnée au bloc d'image prédit correspondant par l'intermédiaire d'un additionneur 7 avant d'être mémorisée. L'image précédente ainsi reconstituée et mémorisée est comparée à l'image courante par un estimateur de mouvement 8 relié à l'entrée du codeur et à la mémoire 6 qui estime le mouvement pour chaque bloc de l'image courante en fonction de cette image mémorisée. Le vecteur mouvement attribué au bloc courant est calculé à partir de l'algorithme connu sous l'appellation anglo-saxonne de "Block-matching" qui réalise une intercorrélation entre 2 images successives et estime le vecteur mouvement correspondant à partir du pic de corrélation obtenu. La précision du vecteur mouvement est prise égale au demi-pixel. Le recalage de mouvement est effectué par un compensateur de mouvement 9 qui, pour chaque bloc de l'image courante, recherche dans la mémoire d'image 6 le bloc de l'image précédente décodée correspondant au vecteur mouvement calculé provenant de l'estimateur de mouvement pour le transmettre sur une entrée du soustracteur 3 en tant que bloc prédit.

Le procédé selon l'invention est décrit ci-après à l'aide du schéma du dispositif représenté à la figure 2.

Le signal numérique à l'entrée vidéo du codeur est transmis simultanément à une mémoire d'image 10 mémorisant N trames consécutives, N étant par exemple choisi égal à 8 trames, et à un préanalyseur 11 utilisé pour la régulation de débit du codeur. Les trames mémorisées sont transmises à un convertisseur lignes/blocs 12 qui transforme chaque groupe de 8 lignes d'une trame en une succession de blocs de 8 x 8 pixels ; deux blocs de 8 x 8 pixels pour le signal de luminance Y et un bloc de 8 x 8 pixels pour chacun des signaux de chrominance Dr et Db correspondants constituent un macrobloc de taille 4 x 8 x 8 pixels.

La succession de ces macroblocs sur une ligne complète de l'image source représente une "bande" constituée donc à partir des 8 lignes de l'image source. Les macroblocs correspondant à la trame courante t sont transmis, parallèlement à un sélecteur de mode 13, à la première entrée de 3 circuits soustracteurs 14a, 14b, 14c et à un circuit de Transformation Cosinus Discrète TCD 8 x 8 15. Sur le deuxième entrée de ces soustracteurs sont présents respectivement les macroblocs prédits à partir de la trame précédente t-20 ms pour 14a et ceux prédits à partir de la trame précédente de même parité t-40 ms pour 14b et 14c.

Les vecteurs mouvement sont calculés, pour chacun de ces macroblocs prédits par 2 estimateurs de mouvement 16a et 16b respectivement à partir du codage et décodage des macroblocs de la trame précédente, vecteur V20, et à partir du codage et décodage de macroblocs de la trame précédente de même parité, vecteur V40. Une mémoire d'image 17 couplée aux estimateurs de mouvement 16a et 16b mémorise les trames reconstituées de l'image qui précède l'image courante. Ainsi les estimateurs de mouvement 16 reçoivent simultanément la vidéo numérisée de l'image courante provenant de la mémoire N trames 10 et la vidéo numérisée provenant de la mémoire d'image 17. Des mesures de corrélation entre ces images permettent alors d'obtenir les vecteurs mouvement.

D'une manière avantageuse, en plus de l'attribution des vecteurs mouvement V20 ou V40 par macrobloc, l'estimateur de mouvement 16 peut assigner un vecteur mouvement, correspondant au même espace temps, à chacun des sous-blocs, par exemple de 4 x 2 pixels, constituant le macrobloc luminance 16 x 8 pixels. Le sous-bloc de 4 x 2 pixels est alors l'entité minimale à laquelle est affecté un vecteur mouvement, ceci afin d'améliorer le résultat du recalage, notamment aux frontières d'objets en mouvement. Pour chacun des sous-blocs 4 x 2 pixels est choisi, parmi les vecteurs mouvements des 4 macroblocs les plus voisins, dont le macrobloc contenant le bloc considéré, le vecteur minimisant l'erreur de recalage du sous-bloc 4 x 2 pixels. La figure 3 représente en exemple 16 sous-blocs de 4 x 2 pixels notés 1 à 16 d'un macrobloc E entouré de macroblocs A à I. Les vecteurs macroblocs pouvant être réassignés à l'un quelconque des sous-blocs 1, 2, 3, 4 sont ceux des macroblocs A, B, D, E. Pour les sous-blocs (5, 6, 7, 8), (9, 10, 11, 12), (13, 14, 15, 16), les vecteurs à considérer sont respectivement ceux des macroblocs (B, C, E, F), (D, E, G, H), (E, F, H, I). Des adresses relatives "Adr" définissant sur 2 bits les vecteurs des macroblocs choisis pour le réassignement aux sous-blocs 4 x 2 pixels sont transmises avec le vecteur mouvement du macrobloc constitué de ces sous-blocs. Ainsi, il est possible d'affecter jusqu'à 16 vecteurs mouvements par macrobloc, définis par le vecteur mouvement du macrobloc lui-même, V20 ou V40 selon le cas, et les adresses relatives correspondantes. L'assignation de vecteurs mouvement à des sous-blocs de macroblocs est plus avantageuse que le choix de macroblocs de plus faible dimension, celle des sous-blocs par exemple, pour des raisons de quantité d'information à transmettre, les adresses relatives étant codées sur 2 bits, les vecteurs mouvement sur 11 bits. Elle nécessite cependant d'associer un vecteur mouvement à chaque macrobloc intra d'une trame. C'est le vecteur V20 qui est choisi si c'est le mode inter-trame qui est autorisé par le sélecteur de mode 13 pour les macroblocs de la trame et selon les conditions explicitées plus loin, c'est le vecteur V40 si le mode inter-image est autorisé ou si toute la trame est codée en intra.

Des compensateurs de mouvement 18a et 18b sélectionnent, à partir de l'image mémorisée fournie par la mémoire d'images 17 et des vecteurs mouvement fournis par les estimateurs de mouvement 16a et 16b, les blocs ou le macrobloc de la trame précédente ou de la trame précédente de même parité reconstituée et mémorisée pour former les macroblocs prédits transmis sur la deuxième entrée des soustracteurs 14a et 14b. Il s'agit respectivement des modes inter-trame et inter-image. Un compensateur de mouvement 18c reçoit, outre l'image de la trame précédente reconstituée et mémorisée provenant de la mémoire 17, les vecteurs V40 calculés pour la trame précédente de même parité, mémorisés dans une mémoire vecteur 19 et enfin réaffectés à la trame courante par projection de ces vecteurs sur cette trame courante par l'intermédiaire du circuit de projection 20 comme indiqué ci-après.

La figure 4 représente la trame courante t et les trames précédentes de même parité t-40 ms, t-80 ms. Les pixels P'1, P'2 ...P'8 de la trame t-40 ms étaient affectés, lors de son codage, des vecteurs mouvement V'1, V'2, ...V'8 des blocs auxquels appartiennent ces pixels, vecteurs mémorisés dans la mémoire vecteur 19. Une projection de ces vecteurs dans leur direction sur la trame courante permet de les réaffecter à chacun des pixels P1, P2, ...P8 de cette trame courante sur lesquels ils sont projetés. En cas de conflit, c'est-à-dire si plusieurs vecteurs sont projetés au même endroit, le vecteur de plus faible amplitude est choisi, exemple du vecteur V1. Si aucun vecteur n'est projeté à cet endroit, on y associe le vecteur nul, exemples des vecteurs V5 et V6. Cette nouvelle affectation des vecteurs V40, obtenue par extrapolation dans le temps, permet au compensateur de mouvement 18c de définir les macroblocs prédits à transmettre sur la deuxième entrée du soustracteur 14c en allant chercher dans la trame précédente de même parité mémorisée dans la mémoire 17, les pixels projetés sur ce macrobloc courant. Pour réaliser cette projection, il est nécessaire d'utiliser le même type de vecteurs, par exemple V40, pour chaque macrobloc. Si, dans le mode inter-image et dans un mode inter décrit plus loin comme mode erreur recalée, le vecteur associé est bien le vecteur V40, qui peut alors être utilisé pour la projection, dans le mode intra-trame le vecteur associé est soit le vecteur V20 soit le vecteur V40 selon les conditions précédemment décrites concernant la réassignation des vecteurs et dans le mode inter-trame le vecteur associé est le vecteur V20. En conséquence, lorsque les macroblocs de la trame précédente de même parité ont été affectés des vecteurs V20, c'est le cas par exemple lors d'un changement de scène ou de période entre la trame t-80 ms et t-40 ms de la figure 4, les vecteurs V40 utilisés pour la projection sont déduits de ces vecteurs V20 par les relations :

$$dX_{40ms} = 2.dx_{20ms}$$

$$dy_{40ms} = 2.dy_{20ms} + \left(\frac{2.\text{parité} - 1}{p}\right)$$

avec

- dx et dy les projections des modules des vecteurs sur les axes Ox, Oy
- parité = 0 si trame paire, parité = 1 si trame impaire
- p = précision des vecteurs mouvement soit 0,5 pour une précision de 1/2 pixel.

Le deuxième terme de $dy_{40ms}$ provient du décalage des origines de Oy entre les trames paires et les trames impaires (la première ligne ou origine d'une trame paire correspond à l'ordonnée 0,5 sur une trame impaire).

Ce mode est appelé mode projection. Les vecteurs V40 ne sont plus transmis puisque, à la réception, le décodeur déduit ces vecteurs à partir de ceux de la trame précédente de même parité. La quantité d'information à transmettre est ainsi réduite pour une erreur donnée entre macrobloc courant et macrobloc prédit.

Ce mode projection peut également être réalisé à partir des vecteurs V20 déduits des vecteurs V40 affectés aux macroblocs par le calcul inverse du précédent.

Les sorties des 3 soustracteurs 14a, 14b, 14c, erreurs entre macrobloc courant et macrobloc prédit, sont reliées au sélecteur de mode 13. La sortie du soustracteur 14b est transmise en parallèle à un nouveau soustracteur 21 dont la deuxième entrée provient d'un compensateur de mouvement 18d. Ce compensateur 18d ne reçoit pas l'image reconstituée provenant de la mémoire 17 mais l'erreur reconstituée concernant la trame précédente de même parité provenant d'une mémoire 22. Une nouvelle erreur est prédite à partir de l'erreur reconstituée et du vecteur V40 calculé par l'estimateur de mouvement 16b pour le macrobloc courant, vecteur transmis au compensateur de mouvement 18d. Ce mode, lié au compensateur de mouvement 18d est appelé mode erreur recalée. La sortie du soustracteur 21, erreur résiduelle, qui représente la différence entre, d'une part, l'erreur courante entre macrobloc courant et macrobloc prédit et, d'autre part, cette erreur prédite ou recalée, est reliée à la cinquième entrée du sélecteur de mode 13.

Le sélecteur de mode 13 choisit parmi le mode intra et les 4 modes inter celui qui donne l'énergie minimale sur un macrobloc luminance, les valeurs d'énergie des modes intra et projection étant préalablement corrigées d'un coefficient multiplicatif inférieur à 1, par exemple 0,9, pour tenir compte du fait que le mode intra, à énergie sensiblement équivalente, est à privilégier et que le mode projection ne nécessite pas la transmission des vecteurs mouvement. Les conditions suivantes sont également prises en compte lors du choix de mode :

→ il est interdit d'avoir un mode inter-trame et un mode inter-image, projection ou erreur recalée pour les macroblocs d'une même trame. Le réassignement des vecteurs mouvement des blocs d'un macrobloc en fonction des vecteurs des macroblocs voisins nécessite en effet que ces macroblocs soient affectés des mêmes vecteurs V20 ou V40 que le macrobloc considéré.

→ Toutes les N trames, une trame est forcée en mode intra-trame. Cette trame a pour but de permettre le montage par groupe de N trames.

→ Les macroblocs d'une trame suivant une trame majoritairement en intra sont, soit en mode intra-trame, soit en mode inter-trame. Une trame majoritairement en intra signifie en effet que l'on est soit en forçage intra, soit en présence d'un changement de scène indiquant qu'il n'y a plus de corrélation avec la trame précédente. La trame qui succède à celle forcée en intra ne peut utiliser la trame précédente de même parité du fait que cette dernière appartient au groupe de N trames précédent. La trame succédant à celle correspondant à un changement de scène n'est plus corrélée avec la trame précédente de même parité.

En sortie du sélecteur de mode 13, le macrobloc sélectionné subit une Transformation Cosinus Discrete sur chacun des blocs de 8 x 8 pixels le constituant par le circuit TCD 8 x 8 23. Chaque bloc de 8 x 8 pixels génère 64 coefficients dont seuls les 60 coefficients HF correspondant aux bandes fréquentielles les plus hautes sont transmis, toujours par l'intermédiaire de ce circuit 23. Ces coefficients subissent une pondération et une sérialisation grâce à un circuit W 24 utilisant une matrice de pondération optimisée et un balayage de type zig-zag ou diagonale de la matrice des coefficients. Ces derniers sont ensuite transmis à un quantificateur adaptatif 25. Ce quantificateur réalise une quantification linéaire avec un pas de quantification constant $q_r$ pour chaque bande. Pour un coefficient d'indice (i, j) dans le bloc luminance correspondant à un coefficient de pondération v (i, j) dans la matrice de pondération utilisée par le circuit de pondération W 24, le pas de quantification $q_r$ (i, j) est relié à un pas de régulation q de la bande correspondante calculé et transmis par un régulateur par bande 26, par la formule optimisée :

$$q_r(i,j) = 2^{\frac{2.v(i,j) + q}{16}}$$

avec $0 \leq q_r(i, j) \leq 255$
et $-32 \leq q < 175$

Le coefficient TCD correspondant F (i, j) est ainsi quantifié :

$$F_q(i,j) = \mathrm{INT}\left(\frac{F(i,j)}{q_r(i,j)}\right)$$

où INT, de l'expression anglosaxonne INTeger, désigne la partie entière. La troncature est en effet préférée à l'arrondi en mode inter - trame ; les coefficients représentant une erreur, il est préférable que son codage donne une valeur sous-estimée que surestimée. Quant au mode intra-trame, ce choix est maintenu pour conserver un rapport signal à bruit identique dans tous les modes pour un pas de régulation donné.

Le pas de régulation pour les blocs chrominance est pris égal à celui du bloc luminance.

La quantification linéaire est suivie d'une quantification quasilinéaire, toujours réalisée par le quantificateur adaptatif 25. Cette loi de quantification quasi-linéaire est basée sur une quantification plus grossière des coefficients TCD de forte valeur que des coefficients de faible valeur.

Le préanalyseur 11 mesure le débit $B_{pre}$ obtenu pour le groupe de N trames avec un pas de régulation $q_{pre}$ calculé lors d'une phase de régulation par période regroupant les N trames précédentes et transmis par un régulateur par période 27.

Si ce débit $B_{pre}$ est différent d'un débit souhaité $B_{sou}$, un pas de régulation $q_j$ est calculé pour chacune des bandes des N trames par le régulateur par bande 26, lors d'une phase de régulation par bande. Ce calcul est effectué par l'intermédiaire d'un régulateur par trame 28 qui reçoit les pas de régulation $q_j$ du régulateur par bande et qui met à jour, lors d'une régulation par trame, une courbe de régulation fournie par le préanalyseur 11 en fonction du débit mesuré $D_{att}$ et du pas moyen calculé $q_m$ pour la trame. Le débit souhaité $D_{sou}$ porté sur la courbe de régulation calculée par le régulateur par trame lors de la trame précédente et transmise au régulateur par bande permet à celui-ci de déterminer le pas de régulation $q_j$ pour la première bande de la trame courante et les bandes suivantes.

Lorsque toutes les trames ont été quantifiées, le régulateur par période 27 réactualise la courbe de régulation en fonction d'un débit mesurée $B_{att}$ et du pas moyen $q_i$ de ces N trames calculé à partir du pas moyen de chaque trame transmis par le régulateur par trame. Il calcule le pas de régulation $q_{pre}$ pour la préanalyse de la période suivante.

Dans le cas où le débit $B_{pre}$ est très proche du débit souhaité $B_{sou}$, le pas de régulation du préanalyseur 11 est appliqué au quantificateur adaptatif 25, via le régulateur par trame et par bande, pour les N trames de la période et ce pas est conservé pour la préanalyse de la période suivante.

Les coefficients quantifiés provenant du quantificateur adaptatif 25 sont transmis à un codeur 29 réalisant un codage en longueur variable et par plage de ces coefficients. Il multiplexe les vecteurs V20, V40, adresses relatives transmis par les estimateurs de mouvement ainsi que l'information de mode choisi. Il possède, en sortie, une mémoire tampon qui compense les différences de débit d'une bande à l'autre et qui est vide après chaque trame.

Les informations codées sont prélevées par les 3 régulateurs 26, 28, 27 pour mesurer respectivement, le débit par bande $dcou_j$, le débit par trame $D_{att}$ et le débit par période $B_{att}$.

Les algorithmes correspondant aux différents calculs du pas de régulation effectués par le préanalyseur et les régulateurs sont explicités par la suite à l'aide des figures 6 et 7, en complément de la description faite ci-dessus.

La sortie du codeur 29 est transmise à une première entrée d'un multiplexeur 30, dont la deuxième entrée provient d'un canal BF.

Le canal BF est constitué à partir du circuit TCD 8 x 8 15 qui réalise, en sa sortie et après transformation du bloc d'image, une sélection des coefficients correspondant aux bandes fréquentielles les plus basses pour ne transmettre que les 4 premiers coefficients basse fréquence. Ces 4 coefficients BF subissent une transformation inverse par le circuit $TCD^{-1}$ 2 x 2 31 qui transmet ainsi, après avoir traversé un codeur MIC 32, une "sous-image" à la deuxième entrée du multiplexeur 30. C'est par exploitation et interpolation des données corrélés des "sous-images" que les modes de lecture rapides du magnétoscope sont réalisés.

Comme il a été dit précédemment, le compensateur de mouvement 18 travaille sur des images reconstituées. Pour ce faire, les 60 coefficients quantifiés par le quantificateur 25 sont dérivés vers des circuits réalisant successivement la fonction inverse de la quantification, circuit $Q^{-1}$ 33 qui reçoit également les pas de quantification du quantificateur 25, la fonction inverse de la pondération et du balayage zig-zag, circuit $W^{-1}$ 34, pour être présentés à la première entrée d'un circuit de Transformation Cosinus Discrète Inverse $TCD^{-1}$ 8 x 8 35. La sous-image du canal BF prélevée en sortie du circuit $TCD^{-1}$ 31, transformée par le circuit TCD 2 x 2 36, fournit les 4 coefficients BF sur la deuxième entrée du circuit $TCD^{-1}$ 8 x 8 35. Après transformation inverse, le bloc d'image reconstitué est transmis sur la première entrée d'un additionneur 37 dont la deuxième entrée reçoit l'erreur prédite en mode erreur recalée.

En effet, le bloc correspondant à l'erreur prédite, calculé par le compensateur de mouvement 18d, est prélevé à la sortie de ce dernier pour être transmis à un sélecteur 38 commandé par le sélecteur de mode 13. Uniquement en mode erreur recalée, ce sélecteur 38 transmet le bloc à un circuit TCD 8 x 8 39 qui fournit en sortie les seuls 60 coefficients HF transformés. Ces derniers subissent l'opération inverse par le circuit $TCD^{-1}$ 8 x 8 40, le bloc reconstitué étant ensuite présenté sur la deuxième entrée de l'additionneur 37. Cet additionneur réalise ainsi, en mode erreur recalée uniquement, l'addition du bloc représentant l'erreur prédite au bloc présent sur la première entrée représentant, dans ce mode, la différence reconstituée entre l'erreur entre bloc courant et bloc prédit d'une part, l'erreur prédite d'autre part. Dans les autres modes, l'additionneur 37 ne fait que transmettre les informations présentes sur la première entrée. Dans tous les modes inter, la sortie de l'additionneur 37 représente l'erreur reconstituée et est mémorisée dans la mémoire d'image 22. Ce n'est plus le cas en mode intra mais le bloc intra mémorisé n'est jamais exploité pour des raisons de coût énergétique.

La sortie de l'additionneur 37 est également reliée à la première entrée d'un deuxième additionneur 41 dont la deuxième entrée reçoit un bloc prédit. En effet, les blocs prédits calculés par les compensateurs de mouvement 18a, 18b, 18c sont prélevés à leur sortie pour être transmis au sélecteur 36. Celui-ci choisit la sortie du compensateur 18a, 18b, 18b, 18c ou aucune sortie selon que le mode sélectionné par le sélecteur de mode 13 est respectivement le mode inter-trame, inter-image, erreur recalée, projection ou intra-trame pour sélectionner, si tel est le cas, le bloc à transmettre. Celui-ci est alors transformé par un circuit TCD 8 x 8 42 qui fournit en sortie les seuls 60 coefficients HF transformés. Ces derniers subissent l'opération inverse par le circuit $TCD^{-1}$ 8 x 8 43, le bloc d'image reconstitué étant ensuite présenté sur la deuxième entrée de l'additionneur 41. La sortie de l'additionneur 41 est reliée à la mémoire d'image 17. En mode intra-trame, le deuxième additionneur 41 ne fait que transmettre les informations présentes sur la première entrée et les 64 coefficients intra provenant du circuit $TCD^{-1}$ 35 mémorisés par la mémoire 17 représentent l'image courante reconstituée. En mode inter-trame, inter-image, erreur recalée et projection, le deuxième additionneur 41 ajoute au bloc présent sur la première entrée et représentant l'erreur reconstituée entre bloc courant et bloc prédit, le bloc prédit pour reconstituer l'image courante. Les blocs d'image mémorisés par la mémoire 17 représentent donc dans tous les modes l'image courante reconstituée.

La régulation utilisée par le procédé de codage a pour but, entre autres, d'obtenir le plus rapidement possible un pas de régulation constant lors du défilement des images jusqu'au moment où le contenu varie beaucoup entre deux groupes d'images nécessitant alors un pas de régulation différent. Elle est basée sur les statistiques des images qui montrent que l'évolution du débit, pour une image source quelconque, suit une loi logarithmique en fonction du pas de régulation. Par exemple les figures 5a, 5b et 5c représentent en échelle semi-logarithmique les courbes 44, 45, 46 d'évolution du débit en fonction du pas pour des séquences test d'images sources de types différents et connues respectivement sous les appellations anglo-saxonnes "table tennis", "flower garden" et "mobile and calendar". Les figures 5a, 5b et 5c correspondent respectivement aux modes inter-image, inter-trame et intra-trame. Toutes ces courbes peuvent être assimilées à des droites parallèles. Pour une image déjà codée, par exemple par TCD, chaque courbe de régulation n'est une droite qu'au voisinage d'un pas de régulation donné. Cette droite $y = ax + b$ est appelée droite de régulation. La courbe de régulation globale peut cependant être assimilée à une succession de droites de pentes voisines de "a". Cette pente moyenne "a" de la courbe de régulation est statistiquement constante d'une image à l'autre et d'un mode à l'autre.

L'organigramme de la figure 6 explicite le principe de régulation tel qu'il est utilisé par le dispositif décrit précédemment. Cet organigramme concerne les différentes phases de régulation réalisées par les circuits préanalyseur 11, régulateur par période 27, régulateur par trame 28 et régulateur par bande 26, respectivement phases de préanalyse, régulation par période de N trames, par trame et par bande.

La phase de préanalyse concerne les étapes 47 à 51. L'étape 47 initialise différents paramètres remis ensuite à jour à chaque itération, à savoir, un pas de régulation préanalyse $q_{pre}$ choisi par exemple à une valeur moyenne de 54 pour la préanalyse de la première période de N trames appelée $P_1$, une précision "précis" sur le calcul d'un rapport de débit R fixée à 256, la pente "a" de la courbe de régulation choisie à une valeur de - 0,19.

La mesure et mémorisation du débit $B_{pre}$ des N trames, $D_{pre}$ de chaque trame de la période et $dpre_j$ de chaque bande j de chaque trame avec un pas de régulation préanalyse $q_{pre}$ est effectuée dans l'étape 48. Le procédé calcule ensuite, à l'étape 49, le rapport du débit souhaité $B_{sou}$ pour les N trames codées au débit $B_{pre}$ mesuré,

$$R = \frac{B_{sou}}{B_{pre}}$$

avec une précision de 1/128, ou sa valeur tronquée à 8 bits, R étant généralement inférieur à 2.

L'étape 50 succède alors à l'étape 49 qui permet d'ajuster le coefficient directeur de la droite de régulation de la manière suivante :

| | |
|---|---|
| $R < 0,9$ | $a = - 0,15$ |
| $0,9 \leq R \leq 1,05$ | a inchangé |
| $1,05 < R \leq 1,5$ | $a = - 0,18$ |
| $1,5 < R$ | $a = - 0,20$ |

Ainsi, si l'écart entre le débit souhaité $B_{sou}$ et celui obtenu lors de la préanalyse $B_{pre}$ est peu significatif, c'est-à-dire compris entre 2 valeurs voisines de 1, par exemple 0,9 et 1,05, le coefficient "a" calculé à l'itération période précédente ou à l'initialisation est conservé car le pas de régulation pour ces N trames préanalysées sera voisin de celui des N trames précédentes. S'il est inférieur ou supérieur à ces limites, le coefficient est imposé, supérieur à la pente moyenne des courbes de régulation si le débit $B_{pre}$ est trop grand, de manière à obtenir un pas de régulation plutôt surévalué, inférieur dans l'autre cas.

La droite de régulation est ensuite déterminée à l'étape 51 en fonction du débit $B_{pre}$ obtenu pour le pas de régulation $q_{pre}$ :

$$b = 20 \operatorname{Log} B_{pre} - a\, q_{pre}.$$

L'étape 52 initialise la trame In de la période courante $P_m$ à $I_1$.

Si le rapport R est égal à 1 à 1/précis près, précis étant une valeur calculée à l'itération précédente de la phase régulation trame ou régulation période pour la première trame de la période ou à l'initialisation, vérification effectuée à l'étape 53, le pas de régulation $q_{pre}$ est correct. Il est alors utilisé, lors de l'étape 54, pour coder la trame complète de la bande 1 à Nb et toutes les trames restantes de la période, sans passer par les phases de régulation par bande et trame. Il est maintenu comme pas de régulation de la période suivante $q_{pre} + 1$ de même que le paramètre précis maintenu identique. Le retour à l'étape 48 se fait après incrémentation de m et choix de $q_{pre} + 1$ comme nouveau pas de régulation préanalyse à l'étape 55.

Ce parcours concerne généralement les images d'une même séquence peu évolutive donc fortement corrélées pour lesquelles la convergence du pas de régulation a été atteinte.

Si le rapport R est différent de 1 à 1/précis près, un nouveau pas de régulation est calculé. Pour ce faire, l'étape 56 calcule le débit souhaité $D_{sou}$ pour la trame In:

$$D_{sou} = R\, D_{pre}$$

L'étape suivante 57 est la phase de régulation par bande. Elle est détaillée plus loin, en regard d'un organigramme séparé, objet de la figure 7. Cette phase, représentée par l'étape 57, réalise le calcul du pas de régulation $q_j$ de chaque bande j de j = 1 à j = Nb d'une trame donnée et mémorise le débit courant $dcou_j$ mesuré pour chaque bande j. Le pas de régulation pour la première bande d'image de la première trame de la période correspond au débit souhaité $D_{sou}$ reporté sur la droite de régulation précédemment calculée.

La troisième phase ou phase de régulation trame initialisée aux étapes 52, 53, 56, se poursuit aux étapes 58 à 63.

A l'étape 58 est mesuré le débit atteint $D_{att}$ pour la trame courante $I_n$ codée.

A l'étape 59, le calcul du pas moyen $q_m$ de cette trame courante $I_n$ est effectué suivant la relation :

$$q_m = \frac{1}{Nb} \sum_{j=1}^{Nb} q_j$$

L'étape suivante 60 permet de déterminer en fonction du pas de régulation moyen $q_m$ et du pas de préanalyse $q_{pre}$ la valeur d'un paramètre "précis" définissant la précision avec laquelle on veut atteindre le débit souhaité $D_{sou}$ suivant les relations :

$$| q_m - q_{pre} | < 2 \Rightarrow precis = 32$$

$$| q_m - q_{pre} | \geq 2 \Rightarrow precis = 256$$

Ainsi lorsque le pas de régulation moyen $q_m$ converge suffisamment vers une valeur, la précision souhaitée est diminuée pour éviter de faire osciller ce pas.

Cette même étape 60 permet de calculer également le pas de régulation $q_{tr}$ + 1 qui sera utilisé lors de la phase de régulation par bande de la trame suivante In + 1 :

Si le débit atteint $D_{att}$ est plus faible que le débit souhaité $D_{sou}$ à la précision 1/précis fixée précédemment, le pas de régulation est diminué en fonction de l'écart mesuré. Ceci s'exprime encore par les relations :

$$\text{Si } D_{att} < D_{sou} - \frac{D_{sou}}{precis} \text{ alors } q_{tr+1} = NINT\left(q_i + 32\,\frac{D_{att} - D_{sou}}{D_{sou}}\right)$$

où le terme 32 est une valeur empirique et le terme NINT, de l'expression anglosaxonne Nearest INTeger, désigne l'entier le plus proche.

Si le débit atteint est égal au débit souhaité à la précision 1/précis près, le pas de régulation est le pas de régulation moyen obtenu pour la trame courante, arrondi à la valeur entière supérieure, ce qui s'exprime par les relations :

$$\text{Si } D_{att} \geq D_{sou} - \frac{D_{sou}}{precis} \text{ alors } q_{tr+1} = INT(q_i + 0{,}9)$$

Enfin, après incrémentation de n à l'étape 61 et vérification que la trame suivante appartient à la même période courante, étape 62, le passage à l'itération suivante est effectué par rebouclage à l'étape 53 et suivantes après choix de $q_{tr+1}$ comme pas de régulation de la nouvelle trame à l'étape 63.

Lorsque les N trames de la période ont été codées, la phase de régulation par période, étapes 64, 65, 66, 55 est opérante. L'étape 64 succède à l'étape 62 et mesure le débit atteint $B_{att}$ pour la totalité des N trames de la période courante. Le pas moyen $q_i$ est calculé sur la période complète à l'étape 65 en sommant les pas moyen $q_m$ de chacune des N trames composant la période courante et divisant la somme par N. La pente "a" de la droite de régulation est alors calculée pour être utilisée lors de la préanalyse de la période suivante :

$$a = \frac{20Log(B_{att}) - 20Log(B_{pre})}{q_i - q_{pre}}$$

L'étape suivante 66 permet de déterminer la valeur du paramètre "précis", précision avec laquelle on veut atteindre le débit souhaité $B_{sou}$ :

$$\text{si } |q_i - q_{pre}| < 2 \Rightarrow precis = 32$$

$$\text{ou si } |q_i - q_{pre}| \geq 2 \Rightarrow precis = 256$$

Après un changement de séquence d'images entraînant une modification de ce pas de régulation moyen, la précision est ainsi augmentée pour obtenir une convergence rapide.

Cette même étape 66 permet de calculer également le pas de régulation $q_{pre+1}$ qui sera utilisé lors de la phase de préanalyse de la période suivante $P_{m+1}$ :

Si le débit atteint $B_{att}$ est plus faible que le débit souhaité $B_{sou}$ à la précision 1/précis fixée précédemment, le pas de régulation est diminué en fonction de l'écart mesuré suivant les formules :

$$\text{Si } B_{att} < B_{sou} - \frac{B_{sou}}{precis} \text{ alors } q_{pre+1} = NINT\left(q_i + 32\,\frac{B_{att} - B_{sou}}{B_{sou}}\right)$$

où le terme 32 est une valeur empirique.

Si le débit atteint est égal au débit souhaité à la précision 1/précis près, le pas de régulation est le pas de régulation moyen obtenu pour la période courante, arrondi à la valeur entière supérieure suivant les formules :

$$\text{Si } B_{att} \geq B_{sou} - \frac{B_{sou}}{precis} \text{ alors } q_{pre+1} = INT(q_i + 0{,}9)$$

Enfin, après incrémentation de m et choix de $q_{pre+1}$, comme nouveau pas de régulation préanalyse, étape 55, l'étape 48 de la phase préanalyse et les suivantes sont à nouveau effectuées.

La figure 7 représente l'organigramme de la phase régulation par bande, objet de l'étape 57 de l'organigramme de la figure 6.

Cette phase a pour but d'ajuster, à partir du pas de régulation et de la mesure du débit de la bande précédente j-1, le pas de régulation pour la bande j pour se rapprocher au mieux du débit souhaité $D_{sou}$ pour l'image complète.

L'étape 67 succédant à l'étape 56 de l'organigramme principal détermine si la trame est la première de la période. Si tel n'est pas le cas, l'étape 68 initialise j à 1 et choisit comme pas de régulation bande, le pas de régulation calculé lors de la phase de régulation trame précédente $q_{tr}$ avant de passer à une étape 70. Si tel est le cas, l'étape suivante est l'étape 69 qui initialise j à 1 et calcule le pas de régulation à utiliser pour cette première bande; la courbe de régulation $y = ax + b$ a été calculée lors de l'itération précédente et le débit souhaité $D_{sou}$ reporté sur cette courbe permet d'en déduire le pas de régulation $q_j$ à adopter pour la première bande de l'image. En tenant compte du fait que $q_j$ est un entier, il en est donc déduit :

$$q_j = q_{pre} + NINT\left(\frac{20Log\dfrac{D_{sou}}{D_{pre}}}{a}\right)$$

Le débit $dcou_j$ de la bande courante j régulé avec le pas de régulation $q_j$ est ensuite mesuré et mémorisé lors de l'étape 70 qui succède à l'étape 69 et 68.

Après avoir vérifié, en l'étape 71, que l'itération précédente ne concernait pas la dernière bande d'image Nb, auquel cas la phase de régulation par bande est terminée et l'étape suivante est l'étape 58 de l'organigramme principal donné en figure 6, j est incrémenté à l'étape 72 signifiant que la bande suivante est prise en compte pour la détermination du pas de régulation par bande.

Pour cela, sont calculés à l'étape 73:

- le rapport $R_{j-1}$ du débit souhaité au débit obtenu lors de la préanalyse réactualisé à la bande j - 1, c'est-à-dire tenant compte des débits obtenus jusqu'à cette bande selon la relation :

$$R_{j-1} = \frac{D_{sou} - \sum_{i=1}^{j-1} d_{cou_i}}{D_{pre} - \sum_{i=1}^{j-1} d_{pre_i}}$$

  où $dcou_i$ et $dpre_i$ sont respectivement le débit courant et le débit obtenu lors de la préanalyse pour la bande i.

Ce rapport est tronqué à une précision qui diminue en fonction du nombre de bandes déjà codées afin de limiter les risques de dépassement de débit et qui est de :

$$1/128 \text{ pour } 1 \leq j < Nb/2$$

$$1/64 \text{ pour } Nb/2 \leq j < 3\ Nb/4$$

$$1/32 \text{ pour } 3\ Nb/4 \leq j \leq Nb$$

- l'erreur $r_{j-1}$, proportionnelle à l'erreur relative commise entre le débit $dcou_{j-1}$ obtenu pour la bande j-1 et le débit souhaité $R_{j-1}$ x $dpre_{j-1}$ pour cette même bande selon la relation :

$$r_{j-1} = 32\frac{d_{cou_{j-1}} - R_{j-1} d_{pre_{j-1}}}{R_{j-1} \quad d_{pre_{j-1}}}$$

  arrondie à la précision 1/8.

L'état de la mémoire tampon du codeur 29 est calculé, à l'étape 74, comme étant la différence entre le débit obtenu après le codage de (j-1) bandes et le débit souhaité pour ces mêmes bandes. En désignant par $buffer_j$ ce contenu, on a la relation :

$$buffer_j = \sum_{i=1}^{j-1} d_{cou_i} - R' \sum_{i=1}^{j-1} d_{pre_i}$$

où R' est le rapport

$$\frac{D_{sou}}{D_{pre}}$$

tronqué à la précision 1/256.

Le but des étapes suivantes est de réajuster le pas de régulation $q_j$ de manière à obtenir une valeur nulle pour cet état de buffer, en fin de codage de l'image. Cet ajustement est fonction, entre autres, de l'état et l'évolution du contenu de la mémoire tampon et de l'erreur relative de débit $r_{j-1}$ de la dernière bande codée j-1.

L'étape 75 extrapole le contenu de cette mémoire tampon à la fin de l'image courante, en supposant constante l'évolution de l'état de cette mémoire tampon entre les deux dernières bandes codées j-2 et j-1.

Si ce contenu est supérieur à un seuil A, choisi de manière empirique égal à

$$-\frac{D_{sou}}{16.\,Nb},$$

on a la relation :

$$buffer_j + (Nb - j)(buffer_j - buffer_{j-1}) > -\frac{D_{sou}}{16.Nb}$$

le pas de régulation $q_j$ pour la bande suivante est modifié, dans l'étape 76, comme suit :

$$q_j = q_{j-1} + INT\left(r_{j-1} + \frac{8}{8}\right)$$

Dans le cas contraire, l'étape 77 vérifie l'accroissement du contenu de la mémoire tampon.

Ainsi, si $buffer_j$ est supérieur à $buffer_{j-1}$, le pas de régulation $q_j$ est modifié, dans l'étape 78, comme suit :

$$q_j = q_{j-1} + INT\left(r_{j-1} + \frac{6}{8}\right)$$

Sinon, l'étape 79 vérifie la valeur de $buffer_j$ qu'elle compare au seuil précédent.

Supérieure à ce seuil, l'étape 80 modifie le pas de régulation de la manière suivante:

$$q_j = q_{j-1} + INT\left(r_{j-1} + \frac{4}{8}\right)$$

Inférieure ou égale à ce seuil, la régulation est normale et l'étape 81 calcule le pas de régulation par la relation :

$$q_j = q_{j-1} + NINT(r_{j-1})$$

Un test complémentaire, avec un éventuel ajustage de $q_j$ est effectué lorsque les 3/4 des bandes d'image ont été codés. Ainsi le test 82 effectué sur j renvoie à l'étape 70 donc à l'itération suivante lorsque j est inférieur ou égal à 3 Nb/4, à l'étape 83 dans le cas contraire. Cette étape consiste en un calcul du pas de régulation moyen pour les (j-1) premières bandes d'image codées :

$$(q_{moy})_j = \frac{1}{j-1}\sum_{i=1}^{j-1} q_j$$

Tant que la dernière bande Nb n'est pas concernée, il est vérifié que $q_j$ est supérieur ou égal à $(q_{moy})_j$ -1 sinon $q_j$ est forcé à cette valeur pour éviter de diverger sur les dernières bandes.

Pour la dernière bande, il est vérifié que $q_j$ est supérieur ou égal à $(q_{moy})_j$ sinon $q_j$ est forcé à cette valeur pour éviter de dépasser le débit souhaité. Après cette étape 83 l'itération suivante est effectuée à partir de l'étape 70 et ainsi de suite.

Une variante du procédé de régulation par trame consiste à actualiser la droite de régulation à l'étape 59, c'est-à-dire à la fin du codage de chaque trame. La valeur du débit atteint $D_{att}$ pour un pas de régulation moyen $q_m$ permet de calculer la nouvelle droite de régulation pour l'itération suivante de la phase régulation trame, les coefficients a et b de cette droite étant définis par les relations :

$$a = \frac{20Log(D_{att}) - 20Log(D_{pre})}{q_m - q_{pre}}$$

$$b = 20\ Log\ (D_{att}) - aq_m.$$

Le pas de régulation $q_{tr}$ + 1 pour la trame suivante est ensuite obtenu à l'étape 60 en portant le débit souhaité $D_{sou}$ pour cette trame suivante sur la droite de régulation.

Une variante du procédé de régulation par période consiste à actualiser la droite de régulation à la fin du codage de la dernière trame de la période en fonction du débit atteint $D_{att}$ et du pas moyen $q_m$ calculés pour cette trame. Le pas de régulation $q_{pre+1}$ calculé à l'étape 66 est alors obtenu en portant le débit souhaité $B_{sou}$ pour la période de N trames sur cette droite.

Une combinaison du procédé de régulation avec les variantes ci-dessus est également possible.

Concernant le procédé de codage et d'une manière plus générale, le nombre de modes inter parmi lesquels un choix énergétique est effectué peut être différent. Il est par exemple possible de rajouter un mode projection inter-trames au mode de projection inter-images basé sur la projection des vecteurs V20 à partir de la trame précédente.

Le réassignement des vecteurs des macroblocs voisins à un macrobloc donné peut également être effectué à partir des vecteurs V20 de la trame précédente. Cette affectation des vecteurs n'est en rien obligatoire ; elle peut être remplacée par un codage sur des blocs de plus faible taille que 8 x 8 pixels. Le nombre de composantes spectrales du canal BF peut être différent de 4. De même, la composition des macroblocs peut être envisagée différente.

La sous-image peut être obtenue de manière différente, par exemple par filtrage sous-bande et sélection des bandes basse fréquence à partir des signaux vidéo en entrée du codeur ou par sous-échantillonnage et filtrage de l'image source. Les données corrélées obtenues ainsi ou par toute autre transformation permettant d'extraire du signal vidéo les composantes fréquentielles basses sont ensuite multiplexées avec les données du canal HF.

D'autre part, le montage par paquet de N trames n'est pas le seul envisageable. Il est tout aussi envisageable d'effectuer un montage trame par trame par l'intermédiaire d'un circuit de commande réalisant une gestion spécifique de la mémoire d'entrée 10 du codeur mémorisant les N trames.

## Revendications

**1.** Procédé de codage inter-trame pour l'enregistrement d'images sur magnétoscope comportant la réalisation de macroblocs intra et inter constitués au moins d'un bloc d'image, à partir d'un macrobloc courant et d'un macrobloc prédit, ce dernier à partir d'une estimation (16) et compensation (18) de mouvement, une sélection (13) d'un des macroblocs inter ou intra selon un critère énergétique appliquée sur au moins un bloc de chacun des macroblocs, une Transformation Cosinus Discrète (23) des blocs d'image, une quantification (25) des coefficients transformés avec un pas de quantification $q_r$ obtenu à partir d'un pas de régulation q et une régulation de débit (11, 26, 27, 28) par variation du pas de régulation et un codage à longueur variable, la régulation étant effectuée par période d'un nombre donné N de trames, N étant un entier supérieur à l'unité pour donner un débit fixe souhaité $B_{sou}$ pour ces N trames, la première trame étant codée en mode intratrame et les trames suivantes en mode intra- trame ou inter-trames, caractérisé en ce que la régulation comprend les étapes suivantes :

- un calcul d'un pas de régulation moyen $q_i$ des N trames précédentes, à partir des pas de régulation utilisés pour la régulation de ces N trames précédentes, le pas de régulation q étant lié au pas de quantification $q_r$ par la relation

$$q_r(i,j) = 2\ \frac{2.V(i,j)+q}{16},$$

où (i,j) est l'indice du coefficient dans le bloc des coefficients, et V(i,j) est un coefficient de pondération correspondant,
- un calcul d'un pas de régulation $q_{pre}$ à partir du pas de régulation $q_i$ et de l'écart de débit entre le débit obtenu pour ces N trames précédentes ($B_{att}$) et le débit souhaité ($B_{sou}$),
- une préanalyse de N trames courantes effectuée à partir du pas de régulation $q_{pre}$ pour calculer un débit $B_{pre}$ pour ces N trames.
- un ajustement du pas de régulation $q_{pre}$ en fonction du rapport entre le débit de consigne $B_{sou}$ et le débit de

préanalyse $B_{pre}$, pour obtenir un pas de régulation à partir duquel est effectuée la régulation par période des N trames

courantes.

2. Procédé selon la revendication 1, caractérisé en ce que la régulation de débit comprend une phase de régulation par trame (52, 53, 56, 58, 59, 60, 61, 62, 63), à l'intérieur de la phase de régulation par période qui calcule un pas de régulation $q_{tr}$ pour la trame suivante (60) dans la période, à partir de l'écart entre un débit souhaité pour la trame courante

$$D_{sou} = \frac{B_{sou}}{B_{pre}} \times D_{pre},$$

$\underline{B_{pre}}$ et $D_{pre}$ étant respectivement le débit obtenu pour la période courante et la trame courante lors de la préanalyse, et le débit atteint $D_{att}$ pour la trame courante.

3. Procédé selon la revendication 2, caractérisé en ce que la régulation de débit comprend une phase de régulation par bande (67 à 83), à l'intérieur de la phase de régulation par trame, une bande étant définie comme une succession, sur une ligne d'image, de macroblocs, qui ajuste un pas de régulation $q_j$ pour chacune des bandes j d'une trame en fonction de l'écart entre le débit souhaité et le débit obtenu pour les (j-1) bandes précédentes.

4. Procédé de codage selon la revendication 3, caractérisé en ce que le pas de régulation de la première bande de la première trame (69) est calculé à partir d'une droite de régulation, logarithme du débit en fonction du pas de régulation, réactualisée en fonction du débit $B_{att}$ et du pas de régulation moyen $q_i$ de la période précédente (65) et sur laquelle est porté le débit souhaité $D_{sou}$ pour cette trame et en ce que le pas de régulation de la première bande des autres trames de la période (68) est le pas de régulation trame $q_{tr}$.

5. Procédé de codage selon l'une quelconque des revendications précédentes, caractérisé en ce que le ou les macroblocs inter réalisés, pour un macrobloc courant donné, représentent soit une erreur courante entre le macrobloc courant et un macrobloc prédit de la trame précédente ou de la trame précédente de même parité, soit une erreur courante entre le macrobloc courant et un macrobloc prédit à partir d'un vecteur mouvement de la trame précédente ou de la trame précédente de même parité projeté sur la trame courante, soit une erreur résiduelle entre l'erreur courante et une erreur prédite à partir du vecteur mouvement, soit plusieurs de ces erreurs.

6. Procédé selon l'une quelconque des revendications précédentes, caractérisé en ce que le macrobloc est constitué d'un nombre pair de blocs d'image pour le signal de luminance, du nombre moitié pour chacun des signaux de chrominance.

7. Procédé selon l'une quelconque des revendications précédentes, caractérisé en ce que l'estimation de mouvement d'un macrobloc consiste en un découpage du macrobloc en sous-blocs et en une affectation à chacun d'eux, parmi les vecteurs mouvement des macroblocs voisins et du macrobloc d'appartenance, de celui permettant d'obtenir la meilleure corrélation.

8. Procédé selon l'une des revendications précédentes, caractérisé en ce que les données régulées et codées sont multiplexées (30) à des données corrélées correspondant à un sous-échantillonnage et filtrage de l'image et définissant une "sous-image".

9. Procédé selon la revendication 8, caractérisé en ce que la sous-image est réalisée par décomposition en sous-bande des signaux vidéo et sélection des bandes basse fréquence.

10. Procédé selon la revendication 8 caractérisé en ce que la régulation est réalisée sur les composantes haute fréquence de la Transformée Cosinus Discrète (23) des blocs d'image du macrobloc sélectionné, les données obtenues après régulation et codage étant multiplexées (30) avec celles provenant d'une Transformation Cosinus Discrète Inverse (31) des composantes basse fréquence de la Transformée Cosinus Discrète (15) appliquée sur les blocs d'image intra.

11. Dispositif de codage inter-trame pour l'enregistrement d'images sur magnétoscope comportant un circuit de conversion (12) d'une trame en macroblocs constitués au moins d'un bloc d'image, au moins un circuit de codage (14) des macroblocs en inter à partir des macroblocs reconstruits et compensés en mouvement, un circuit de sélection (13) d'un des macroblocs inter ou intra selon un critère énergétique appliqué sur au moins un bloc de chacun des macroblocs, un circuit de Transformation Cosinus Discrète (23) de blocs d'image, un régulateur par quantification adaptative (11, 25, 26, 27, 28) des coefficients constituant les blocs transformés avec un pas de quantification $q_r$ obtenu à partir d'un pas de régulation q, le régulateur comprenant un régulateur par période (27) pour donner un débit fixe souhaité $B_{sou}$ par période de N trames, N étant un entier supérieur à l'unité, la première trame étant codée en mode intra-trame et les trames suivantes en mode intra-trame ou inter-trames, caractérisé en ce qu'il comporte également un préanalyseur recevant les N trames à coder, en ce que le régulateur par période calcule un pas de régulation moyen $q_i$ des N trames précédentes ainsi qu'un pas de régulation qpre à partir du pas de régulation moyen $q_i$ et de l'écart de débit entre le débit obtenu pour ces N trames précédentes ($B_{att}$) et le débit souhaité pour le transmettre au préanalyseur, en ce que le préanalyseur (11) mesure le débit Bpre pour les N trames courantes codées à partir du pas de régulation $q_{pre}$ et en ce que le régulateur par période ajuste le pas de régulation $q_{pre}$ en fonction de l'écart du débit $B_{pre}$ avec le débit de consigne $B_{sou}$ pour obtenir un pas de régulation à partir duquel est effectuée la régulation par période des N trames courantes, le pas de régulation q étant lié au pas de quantification $q_r$ par la relation

$$q_r(i,j) = 2^{\frac{2.V(i,j)+q}{16}},$$

où (i,j) est l'indice du coefficient dans le bloc de coefficients et V(i,j) est un coefficient de pondération correspondant.

**12.** Dispositif selon la revendication 11, , caractérisé en ce que le régulateur est couplé au circuit TCD (23) pour recevoir et réguler les coefficients transformés haute fréquence et en ce qu'il comporte un multiplexeur (30) couplé au régulateur pour recevoir les coefficients HF régulés et couplé au circuit de conversion (12) par l'intermédiaire d'un circuit TCD (15) réalisant la transformée d'un bloc intra et d'un circuit TCD inverse réalisant la transformée inverse des coefficients BF de ce bloc intra transformé pour recevoir la sous-image ainsi constituée.

**13.** Dispositif selon la revendication 11, caractérisé en ce que le régulateur comporte un régulateur par trame (28) et un régulateur par bande (26) , une bande étant définie comme une succession sur une ligne d'image, de macroblocs.

**14.** Dispositif selon la revendication 11, 12 ou 13, caractérisé en ce qu'il comporte des estimateurs (16a, 16b) et compensateurs (18a, 18b, 18c, 18d) de mouvement pour la réalisation de macroblocs erreur courante inter-trame et inter-image à partir des vecteurs mouvement des estimateurs de mouvement et de vecteurs mouvement de la trame précédente projetés sur la trame courante ainsi que de macroblocs erreur résiduelle entre erreur courante et erreur prédite à partir du vecteur mouvement.

## Claims

**1.** Method of inter-frame coding for recording images on a video recorder, including the production of intra and inter macroblocks constituted from at least one image block, on the basis of a current macroblock and of a predicted macroblock, the latter on the basis of an estimate (16) and compensation (18) of movement, a selection (13) of one of the inter or intra macroblocks according to an energy criterion applied to at least one block of each of the macroblocks, a Discrete Cosine Transform (23) of the image blocks, a quantization (25) of the transformed coefficients with a quantization interval $q_r$ obtained from a regulation interval q and throughput regulation (11, 26, 27, 28) by variation of the regulation interval and variable-length coding, regulation being carried out per period of a given number N of frames, N being an integer greater than 1 in order to give a desired fixed throughput $B_{des}$ for these N frames, the first frame being coded in intra-frame mode and the following frames in intra-frame or inter-frame mode, characterized in that the regulation comprises the following stages:

- a calculation of an average regulation interval $q_i$ of the N preceding frames, on the basis of the regulation intervals used for the regulation of these preceding N frames, the regulation interval q being related to the quantization interval $q_r$ by the relationship

$$q_r(i,j) = 2\,\frac{2.V(i,j)+q}{16}$$

where (i,j) is the index of the coefficient in the block of coefficients, and V(i,j) is a corresponding weighting coefficient,

- a calculation of a regulation interval $q_{pre}$ on the basis of the regulation interval $q_i$ and of the discrepancy in throughput between the throughput obtained for these preceding N frames ($B_{att}$) and the desired throughput ($B_{des}$),
- a pre-analysis of N current frames which is carried out on the basis of the regulation interval $q_{pre}$ in order to calculate a throughput $B_{pre}$ for these N frames,
- an adjustment of the regulation interval $q_{pre}$ as a function of the ratio between the datum throughput $B_{des}$ and the pre-analysis throughput $B_{pre}$, in order to obtain a regulation interval on the basis of which the regulation per period of the N current frames is carried out.

**2.** Method according to Claim 1, characterized in that the throughput regulation comprises a phase of regulation per frame (52, 53, 56, 58, 59, 60, 61, 62, 63) within the phase of regulation per period which calculates a regulation interval $q_{tr}$ for the following frame (60) in the period, on the basis of the discrepancy between a desired throughput for the current frame

$$D_{des} = \frac{B_{des}}{B_{pre}} \times D_{pre},$$

$\underline{B_{pre}}$ and $D_{pre}$ being respectively the throughput obtained for the current period and the current frame during the pre-analysis, and the throughput obtained $D_{alt}$ for the current frame.

**3.** Method according to Claim 2, characterized in that the throughput regulation comprises a phase of regulation per band (67 to 83), within the phase of regulation per frame, a band being defined as a succession of macroblocks, on one image line, which adjusts a regulation interval $q_j$ for each of the bands j of a frame on the basis of the discrepancy between the desired throughput and the throughput obtained for the preceding (j-1) bands.

**4.** Coding method according to Claim 3, characterized in that the regulation interval of the first band of the first frame (69) is calculated on the basis of a regulation line, logarithm of the throughput as a function of the regulation interval, re-updated as a function of the throughput $B_{att}$ and of the average regulation interval $q_i$ of the preceding period (65) and onto which is plotted the desired throughput $D_{des}$ for this frame, and in that the regulation interval of the first band of the other frames of the period (68) is the frame regulation interval $q_{tr}$.

**5.** Coding method according to any one of the preceding claims, characterized in that the inter macroblock or macroblocks produced, for a given current macroblock, represent either a current error between the current macroblock and a predicted macroblock of the preceding frame or of the preceding frame of the same parity, or a current error between the current macroblock and a macroblock predicted on the basis of a movement vector from the preceding flame or from the preceding frame of the same parity projected onto the current frame, or a residual error between the current error and an error predicted on the basis of the movement vector, or several of these errors.

**6.** Method according to any one of the preceding claims, characterized in that the macroblock consists of an even number of image blocks for the luminance signal, and of half that number for each of the chrominance signals.

**7.** Method according to any one of the preceding claims, characterized in that the movement estimation for a macroblock consists of a segmentation of the macroblock into sub-blocks and of an allocation to each of them, from among the movement vectors of the adjacent macroblocks and of the parent macroblock, of the one making it possible to obtain the best correlation.

**8.** Method according to one of the preceding claims, characterized in that the regulated and coded data are multiplexed (30) with correlated data corresponding to the sub-sampling and filtering of the image and defining a "sub-image".

**9.** Method according to Claim 8, characterized in that the sub-image is produced by sub-band decomposition of the video signals and selection of the low-frequency bands.

**10.** Method according to Claim 8, characterized in that the regulation is carried out on the high-frequency components of the Discrete Cosine Transform (23) of the image blocks of the selected macroblock, the data obtained after regulation and coding being multiplexed (30) with those originating from an Inverse Discrete Cosine Transform (31) of the low-frequency components of the Discrete Cosine Transform (15) applied to the intra image blocks.

**11.** Inter-frame coding device for recording images on a video recorder including a circuit (12) for conversion of a frame into macroblocks consisting at least of one image block, at least one circuit (14) for coding the macroblocks in inter mode on the basis of macroblocks which are reconstructed and compensated in terms of movement, a circuit (13) for selection of one of the inter or intra macroblocks according to an energy criterion applied to at least one block of each of the macroblocks, a circuit for 'Discrete Cosine Transformation (23) of image blocks, a regulator by adaptive quantization (11, 25, 26, 27, 28) of the coefficients constituting the transformed blocks with a quantization interval $q_r$ obtained on the basis of a regulation interval q, the regulator comprising a regulator per period (27) in order to give a desired fixed throughput $B_{des}$ per period of N frames, N being an integer greater than unity, the first frame being coded in intra-frame mode and the following frames in intra-frame or inter-frame mode, characterized in that it also includes a pre-analyzer receiving the N frames to be coded, in that the regulator per period calculates an average regulation interval $q_i$ of the preceding N frames as well as a regulation interval qpre on the basis of the average regulation interval $q_i$ and of the throughput discrepancy between the throughput obtained for these preceding N frames ($B_{att}$) and the throughput which it is desired to send to the pre-analyzer, in that the pre-analyzer (11) measures the throughput $B_{pre}$ for the N current frames coded on the basis of the regulation interval $q_{pre}$ and in that the regulator per period adjusts the regulation interval $q_{pre}$ as a function of the discrepancy between the throughput $B_{pre}$ and the datum throughput $B_{des}$ in order to obtain a regulation interval on the basis of which regulation per period of the N current frames is carried out, the regulation interval q being related to the quantization interval $q_r$ by the relationship

$$q_r(i,j) = 2 \frac{2.V(i,j)+q}{16}.$$

where (i,j) is the index of the coefficient in the block of coefficients and V(i,j) is a corresponding weighting coefficient.

**12.** Device according to Claim 11, characterized in that the regulator is coupled to the DCT circuit (23) in order to receive and regulate the high-frequency transformed coefficients, and in that it includes a multiplexer (30) coupled to the regulator in order to receive the regulated HF coefficients and coupled to the conversion circuit (12) via a DCT circuit (15) carrying out the transformation of an intra block and of an inverse DCT circuit carrying out the inverse transformation of the LF coefficients of this transformed intra block in order to receive the sub-image thus constituted.

**13.** Device according to Claim 11, characterized in that the regulator includes a regulator per frame (28) and a regulator per band (26), a band being defined as a succession of macroblocks on one image line.

**14.** Device according to Claim 11, 12 or 13, characterized in that it includes estimators (16a, 16b) and compensators (18a, 18b, 18c, 18d) of movement for producing inter-image and inter-frame current error macroblocks on the basis of movement vectors from the movement estimators and of movement vectors from the preceding frame which are projected onto the current frame, as well as from residual-error macroblocks, the residual error being between current error and error predicted on the basis of the movement vector.

**Patentansprüche**

**1.** Verfahren zur inter-field-Kodierung für die Aufzeichnung von Bildern auf einem Videorekorder mit der Bildung von intra- und inter-Makroblöcken, die durch wenigstens einen Bildblock gebildet sind, aus einem laufenden Makroblock und einem vorausgesagten Makroblock, letzterer aufgrund einer Schätzung (16) und einer Bewegungskompensation (18), einer Auswahl (13) eines der inter- oder intra-Makroblöcke gemäß einem Energiekriterium, das auf wenigstens einen Block jedes Makroblocks angewendet wird, einer Diskreten Cosinustransformation (23) der Bildblöcke, einer Quantisierung (25) der transformierten Koeffizienten mit einem Quantisierschritt qr aus einem Regelschritt q und einer Regelung der Datenrate (11, 26, 27, 28) durch Änderung des Regelschrittes und einer Kodierung mit variabler Länge, wobei die Regelung je Periode durch eine bestimmte Anzahl N von Halbbildern erfolgt und N eine ganze Zahl größer als eins ist, um eine feste gewünschte Datenrate $B_{sou}$ für die N Halbbilder zu liefern, und wobei das erste Halbbild im intra-field-Modus kodiert und die folgenden Halbbilder in iIntra-field- oder inter-field-Modus kodiert werden, dadurch gekennzeichnet, daß die Regelung die folgenden Schritte enthält:

- eine Berechnung eines mittleren Regelschritts $q_i$ der N vorangehenden Halbbilder aus dem Regelschritt, der für die Regelung dieser N vorangehenden Halbbilder angewendet wird, wobei der Regelschritt q mit dem Quantisierschritt $q_r$ durch die Gleichung

$$q_r\,(i,j) = 2\,\frac{2.V(i,j)+q}{16}$$

  verknüpft ist und (i,j) der Index des Koeffizienten in dem Block der Koeffizienten und V(i,j) ein entsprechender Wichtungskoeffizient ist,
- eine Berechnung eines Regelschrittes $q_{pre}$ aus dem Regelschritt $q_i$ und der Abweichung der Datenrate zwischen der für die N vorangehenden Halbbilder ($B_{att}$) erzielten Datenrate und der gewünschten Datenrate ($B_{sou}$),
- eine Voranalyse der N laufenden Halbbilder aus dem Regelschritt $q_{pre}$ für die Berechnung einer Datenrate $B_{pre}$ für diese N Halbbilder,
- eine Einstellung des Regelschrittes $q_{pre}$ als Funkton des Verhältnisses zwischen der Vorgabe-Datenrate $B_{sou}$ und der Datenrate der Voranalyse $B_{pre}$, um einen Regelschritt zu bilden, aus dem die Periodenregelung der N laufenden Halbbilder erfolgt.

**2.** Verfahren nach Anspruch 1, dadurch gekennzeichnet, daß die Regelung der Datenrate eine Phase der Halbbildregelung (52, 53, 56, 58, 59, 60, 61, 62, 63) innerhalb der Phase der Periodenregelung enthält, die einen Regelschritt $q_{tr}$ für das folgende Halbbild (60) in der Periode aus der Abweichung zwischen einer gewünschten Datenrate für das laufende Halbbild berechnet

$$D_{sou} = \frac{B_{sou}}{B_{pre}} \times D_{pre},$$

wobei $\underline{B}_{pre}$ und $D_{pre}$ die Datenrate für die laufende Periode bzw. das laufende Halbbild aus der Voranalyse bzw. die erzielte Datenrate $D_{att}$ für das laufende Halbbild sind.

**3.** Verfahren nach Anspruch 2, dadurch gekennzeichnet, daß die Regelung der Datenrate eine Phase der Regelung durch einen Streifen (67 bis 83) innerhalb der Phase der Halbbildregelung enthält, wobei ein Streifen als eine Folge auf einer Zeile des Bildes von Makroblöcken definiert ist, die einen Regelschritt $q_j$ für jeden der Streifen j eines Halbbildes als Funktion der Abweichung zwischen der gewünschten Datenrate und der für die (j-1) vorangehenden Streifen erhaltenen Datenrate einstellt.

**4.** Verfahren zur Kodierung nach Anspruch 3, dadurch gekennzeichnet, daß der Regelschritt des ersten Streifens des ersten Halbbildes (69) aus einer Regelungsgeraden, dem Logarithmus der Datenrate als Funktion des Regelschrittes, berechnet, wird der als Funktion der Datenrate $B_{att}$ und des mittleren Regelschrittes $q_i$ der vorangehenden Periode (65) neuaktualisiert wird, und auf der die gewünschte Datenrate $D_{sou}$ für dieses Halbbild übergetragen wird, und daß der Regelschritt des ersten Streifens der anderen Halbbilder der Periode (68) der Halbbild-Regelschritt $q_{tr}$ ist.

**5.** Verfahren zur Kodierung nach einem der vorangehenden Ansprüche, dadurch gekennzeichnet, daß der oder die inter-Makroblöcke, die für einen bestimmten laufenden Makroblock gebildet werden, entweder einen laufenden Fehler zwischen dem laufenden Block und einen vorausgesagten Makroblock des vorangehenden Halbbildes oder des vorangehenden Halbbildes derselben Parität, entweder ein laufender Fehler zwischen dem laufendem Makroblock und einem vorausgesagten Makroblock, darstellen, der aus einem Bewegungsvektor des vorangehenden Halbbildes oder des vorangehenden Halbbildes derselben Parität, projiziert auf das laufende Halbbild, oder ein verbleibender Fehler zwischen dem laufendem Fehler und einem Fehler, der aus dem Bewegungsvektor vorausgesagt wird, oder mehrere dieser Fehler darstellen.

6. Verfahren nach einem der vorangehenden Ansprüche, dadurch gekennzeichnet, daß der Makroblock aus einer geradzahligen Anzahl von Bildblöcken für das Luminanzsignal mit der halben Anzahl für jedes der Chrominanzsignale gebildet wird.

7. Verfahren nach einem der vorangehenden Ansprüche, dadurch gekennzeichnet, daß die Bewegungsschätzung eines Makroblocks in einer Aufteilung des Makroblocks in Unterblöcke und in einer Zuordnung zu jedem von zwei unter den Bewegungsvektoren der benachbarten Makroblöcke und einem dazu gehörenden Makroblock besteht, von dem die beste Korrelation erreicht werden kann.

8. Verfahren nach einem der vorangehenden Ansprüche, dadurch gekennzeichnet, daß die geregelten und kodierten Daten mit korrelierten Daten gemultiplext werden (30), die einer Unterabtastung und Filterung des Bildes entsprechen und ein "Unterbild" definieren.

9. Verfahren nach Anspruch 8, dadurch gekennzeichnet, daß das Unterbild durch Zerlegung der Videosignale in Unterbänder und Auswahl der niederfrequenten Bänder gebildet wird.

10. Verfahren nach Anspruch 8, dadurch gekennzeichnet, daß die Regelung auf hochfrequenten Komponenten der diskreten Cosinustransformation (23) der Bildblöcke des ausgewählten Makroblocks erfolgt, daß die nach der Regelung und der Kodierung gewonnenen Daten mit denjenigen gemultiplext werden (30), die von einer Inversen Diskreten Cosinustransformation (31) der niederfrequenten Komponenten der Diskreten Cosinustransformation (15) stammen, die auf die intra-Bildblöcke angewendet wird.

11. Vorrichtung zur inter-field-Kodierung für die Aufzeichnung von Bildern auf einem Videorekorder mit einer Schaltung (12) zur Umsetzung eines Halbbildes in Makroblöcke, die aus wenigstens einem Bildblock bestehen, wenigstens einer Schaltung (14) zur Kodierung der Makroblöcke in inter aus den Makroblöcken, die wiederhergestellt und bewegungskompensiert wurden, mit einer Schaltung (13) zur Auswahl eines der inter- oder intra-Makroblöcke gemäß einem Energiekriterium, das auf wenigstens einem Block jedes der Makroblöcke angewendet wird, einer Schaltung für eine Diskrete Cosinustransformation (23) der Bildblöcke, einem Regler durch eine adaptive Quantisierung (11, 25, 26, 27, 28) der Koeffizienten, die die transformierten Blöcke bilden, mit einem Quantisierschritt $q_r$, der aus einem Regelschritt q gewonnen wird, wobei der Regler einen Periodenregler (27) enthält, um eine feste gewünschte Datenrate $B_{sou}$ je Periode der N Halbbilder zu ergeben, wobei N eine ganze Zahl größer als 1 ist, und das erste Bild im intra-field-Modus kodiert wird und die folgenden Halbbilder im intra-field-Modus oder im inter-field-Modus kodiert werden,
dadurch gekennzeichnet, daß die Vorrichtung außerdem einen Voranalysator enthält, der die N zu kodierenden Halbbilder empfängt, daß der Periodenregler einen mittleren Regelschritt $q_i$ der N vorangehenden Halbbilder berechnet sowie einen Regelschritt qpre aus dem mittleren Regelschritt $q_i$ und der Abweichung der Datenrate zwischen der für die N vorangehenden Halbbilder gewonnenen Datenrate ($B_{att}$) und den der gewünschten Datenrate für die Übertragung zu dem Voranalysator enthält, und daß der Voranalysator (11) die Datenarate Bpre für die aus dem Regelungsschritt $q_{pre}$ kodierten N laufenden Halbbilder mißt und daß der Periodenregler den Regelschritt $q_{pre}$ als Funktion der Abweichung der Datenrate $B_{pre}$ von der Vorgabe-Datenrate $B_{sou}$ einstellt, um einen Regelschritt zu gewinnen, aus dem die Periodenregelung der N laufenden Halbbilder erfolgt, und daß der Regelschritt q mit dem Quantisierschritt $q_r$ durch die Gleichung

$$q_r(i,j) = 2\,\frac{2.V(i,j)+q}{16}$$

verknüpft ist wobei (i,j) der Index des Koeffizienten in dem Block der Koeffizienten und V(i,j) ein Koeffizient der entsprechenden Wichtung ist.

12. Vorrichtung nach Anspruch 11, dadurch gekennzeichnet, daß der Regler mit der DCT-Schaltung (23) verbunden ist, um die hochfrequenten, transformierten Koeffizienten zu empfangen, und daß er einen Multiplexer (30) enthält, der mit dem Regler verbunden ist, um die geregelten HF-Koeffizienten zu empfangen und über eine Schaltung DCT (15) mit der Umsetzschaltung (12) verbunden ist, die die Transformierung eines intra-Blockes bewirkt, und über eine inverse DCT-Schaltung verbunden ist, die die inverse Transformierung der NF-Koeffizienten dieses transformierten intra-Blockes bewirkt, um das derart gebildete Unterbild zu empfangen.

13. Vorrichtung nach Anspruch 11, dadurch gekennzeichnet, daß der Regler einen Halbbildregler (28) und einen Streifenregler (26) enthält, wobei ein Streifen als eine Folge von Makroblöcken auf einer Zeile des Bildes definiert ist.

**14.** Vorrichtung nach Anspruch 11, 12 oder 13, dadurch gekennzeichnet, daß sie Schätzer (16a, 16b) und Bewegungskompensatoren (18a, 18b, 18c, 18d) für die Bildung von inter-field- und inter-frame-Makroblöcken mit laufendem Fehler aus den Bewegungsvektoren der Bewegungsschätzer und den Bewegungsvektoren des vorangehenden Halbbildes, das auf das laufende Halbbild projiziert wird, sowie von Makroblöcken mit einem verbleibendem Fehler zwischen einem laufenden Fehler und einem aus dem Bewegungsvektor vorausgesagten Fehler enthält.

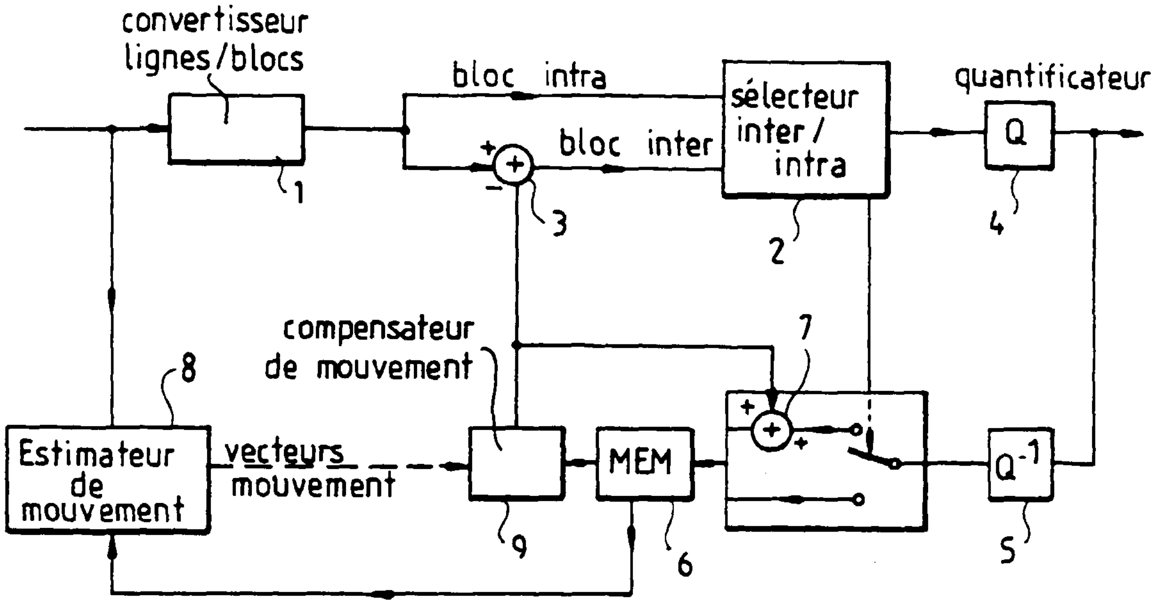
convertisseur
lignes/blocs
bloc intra
bloc inter
sélecteur
inter/
intra
quantificateur
Q
1
2
3
4
compensateur
de mouvement
7
8
Estimateur
de
mouvement
vecteurs
mouvement
MEM
$Q^{-1}$
9
6
5

FIG.1

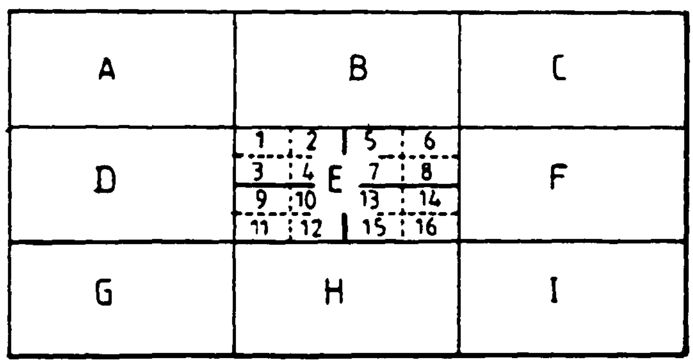
A
B
C
D
E
F
G
H
I
1
2
5
6
3
4
7
8
9
10
13
14
11
12
15
16

FIG.3

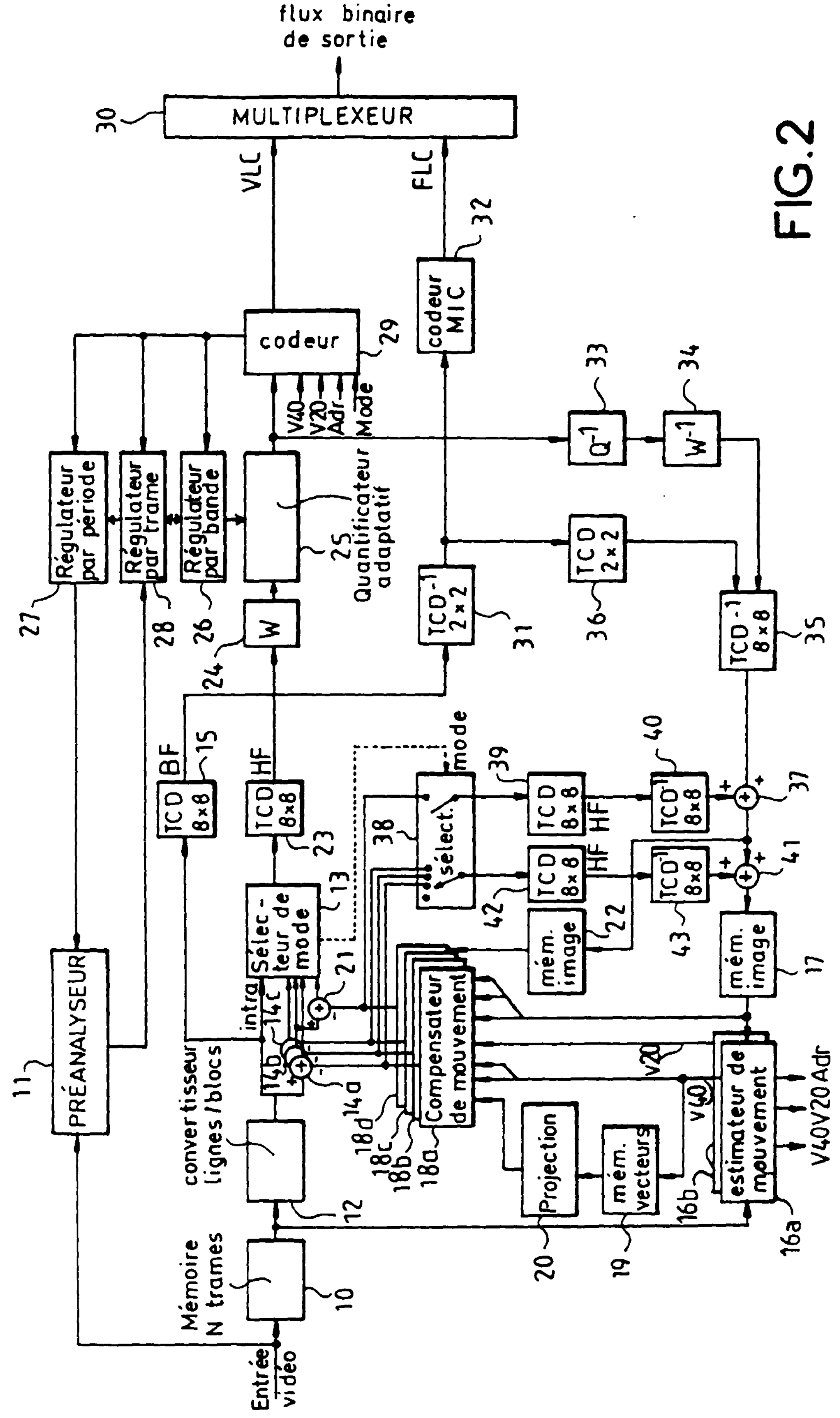
flux binaire de sortie
MULTIPLEXEUR
30
VLC
FLC
codeur
29
codeur MIC
32
V40
V20
Adr
Mode
Régulateur par période
Régulateur par trame
Régulateur par bande
27
28
26
Quantificateur adaptatif
25
W
24
Q⁻¹
33
W⁻¹
34
TCD⁻¹ 2×2
31
TCD 2×2
36
TCD⁻¹ 8×8
35
PRÉANALYSEUR
11
TCD 8×8
BF
15
TCD 8×8
HF
23
Sélecteur de mode
13
intra
14c
14b
14a
21
mode
sélect.
38
39
TCD 8×8
HF
HF
40
TCD⁻¹ 8×8
37
41
42
43
22
mém. image
17
Compensateur de mouvement
18a
18b
18c
18d
Projection
20
mém. vecteurs
19
estimateur de mouvement
16a
16b
V20
V40
V40V20Adr
convertisseur lignes/blocs
12
Mémoire N trames
10
Entrée vidéo
FIG.2

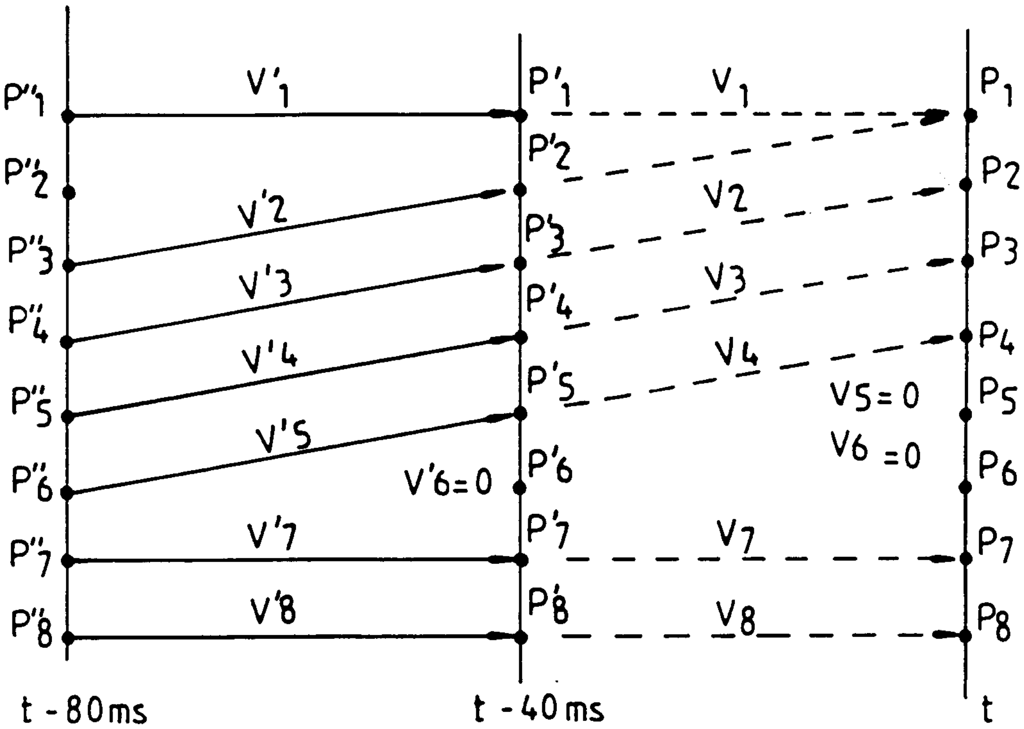
P''1
V'1
P'1
V1
P1
P''2
P'2
P2
V'2
V2
P''3
P'3
P3
V'3
V3
P''4
P'4
P4
V'4
V4
P''5
P'5
P5
V5=0
V6 =0
V'5
P''6
V'6=0
P'6
P6
P''7
V'7
P'7
V7
P7
P''8
V'8
P'8
V8
P8
t - 80ms
t - 40ms
t

FIG.4

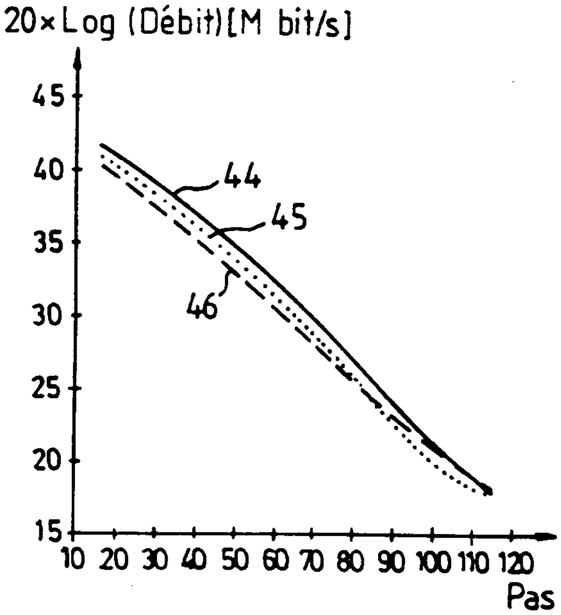


FIG. 5a

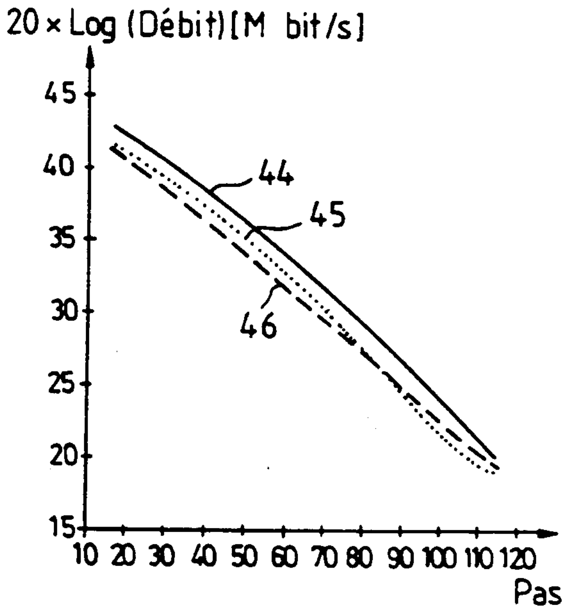


FIG. 5b

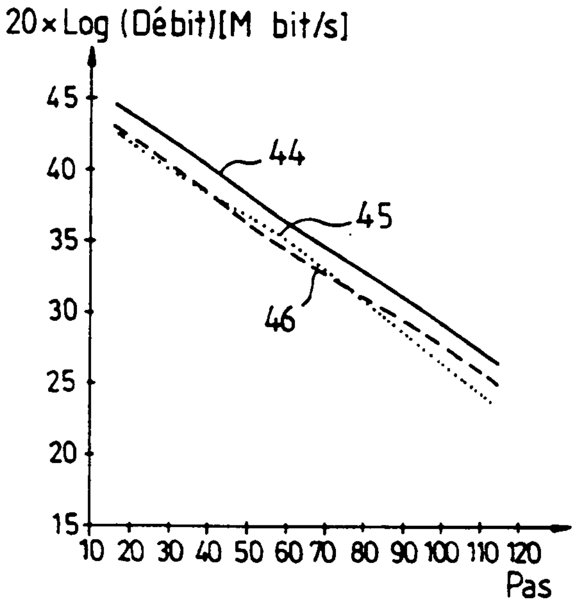


FIG. 5c

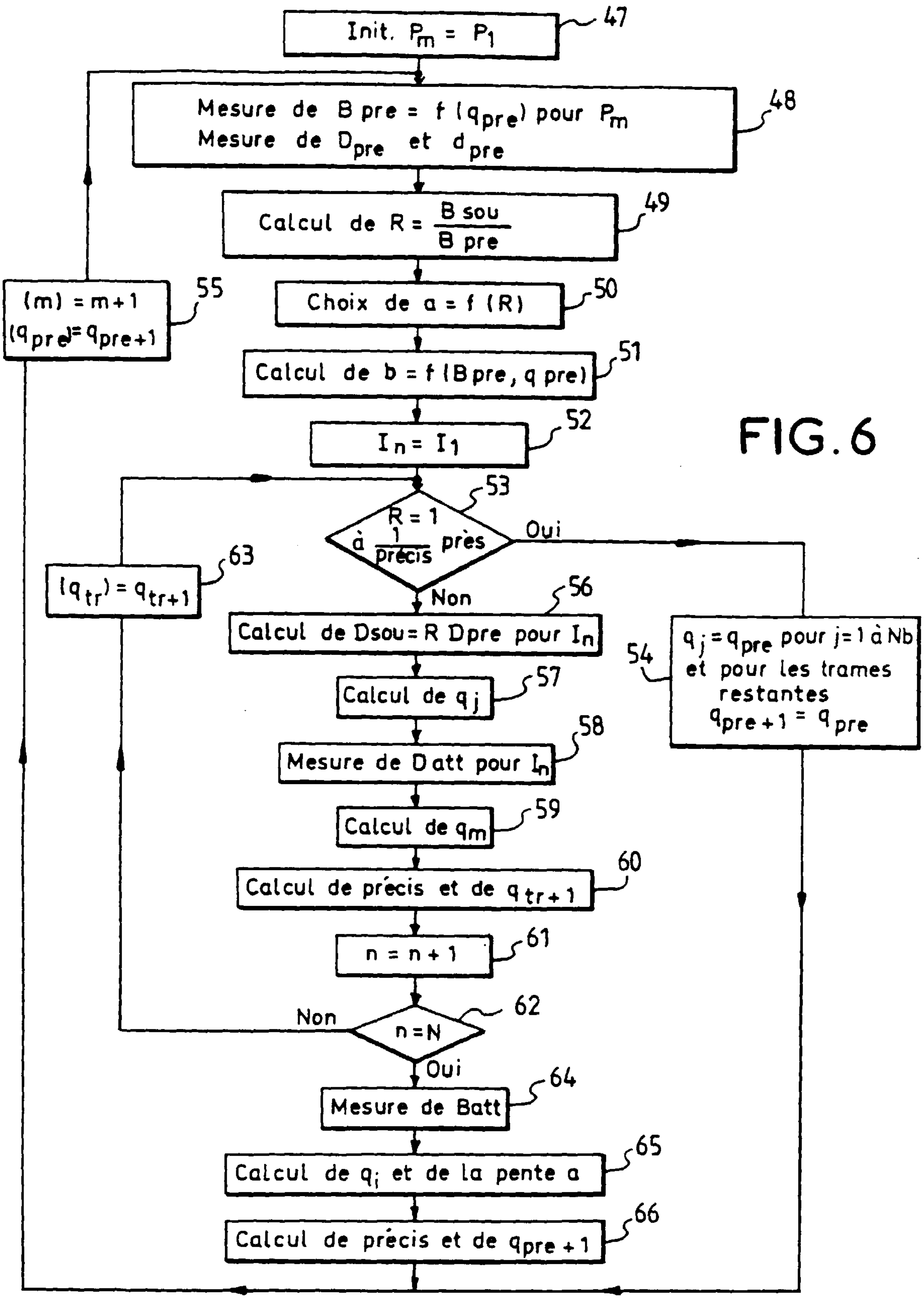
Init. $P_m$ = $P_1$
47
Mesure de B pre = f ($q_{pre}$) pour $P_m$
Mesure de $D_{pre}$ et $d_{pre}$
48
Calcul de R = $\frac{B\ sou}{B\ pre}$
49
Choix de a = f (R)
50
Calcul de b = f (B pre, q pre)
51
$I_n = I_1$
52
R = 1 à $\frac{1}{précis}$ près
53
Oui
Non
(m) = m+1
($q_{pre}$) = $q_{pre+1}$
55
($q_{tr}$) = $q_{tr+1}$
63
Calcul de Dsou = R Dpre pour $I_n$
56
$q_j = q_{pre}$ pour j = 1 à Nb et pour les trames restantes $q_{pre+1} = q_{pre}$
54
Calcul de $q_j$
57
Mesure de D att pour $I_n$
58
Calcul de $q_m$
59
Calcul de précis et de $q_{tr+1}$
60
n = n + 1
61
n = N
62
Non
Oui
Mesure de Batt
64
Calcul de $q_i$ et de la pente a
65
Calcul de précis et de $q_{pre+1}$
66

FIG. 6

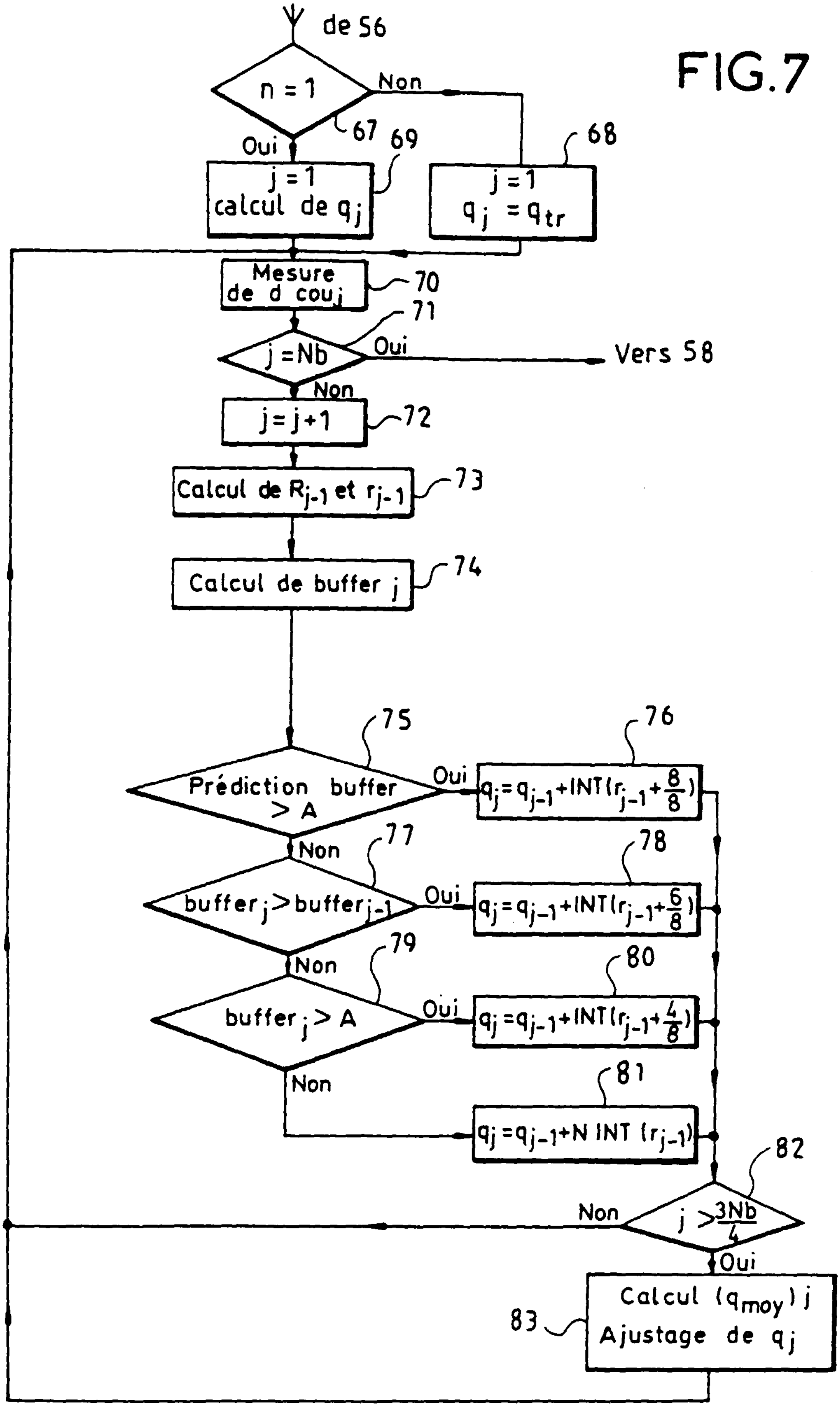
de 56
n = 1
Non
67
Oui
69
68
j = 1
calcul de qj
j = 1
qj = qtr
Mesure
de d couj
70
71
j = Nb
Oui
Vers 58
Non
j = j + 1
72
Calcul de Rj-1 et rj-1
73
Calcul de buffer j
74
75
76
Prédiction buffer > A
Oui
qj = qj-1 + INT(rj-1 + 8/8)
Non
77
78
bufferj > bufferj-1
Oui
qj = qj-1 + INT(rj-1 + 6/8)
Non
79
80
bufferj > A
Oui
qj = qj-1 + INT(rj-1 + 4/8)
Non
81
qj = qj-1 + N INT (rj-1)
82
Non
j > 3Nb/4
Oui
Calcul (qmoy) j
Ajustage de qj
83

FIG.7